# DEMANDE DE BREVET EUROPEEN

(11) **EP 3 205 815 A2**
(43) Date de publication de la demande: **16.08.2017**
(21) Numéro de dépôt: 17000018.6
(22) Date de dépôt: 06.01.2017
(51) Int. Cl.: F01B 17/02

(54) **MOTEUR HYBRIDE À PISTONS HYBRIDE PROPULSÉS PAR UN FLUIDE EN PRESSION ET DÉBIT ET UN DRONE À DEPLACEMENTS NORD OU SUD, EST OU OUEST ET HAUT OU BAS ET STATIONNAIRE**

(30) Priorité: 29.01.2016 FR 1600157; 26.05.2016 FR 1600848; 27.05.2016 WO PCT/IB2016/000725; 24.06.2016 WO PCT/IB2016/000880; 24.06.2016 EP 16001417; 22.07.2016 WO PCT/IB2016/001037; 19.08.2016 WO PCT/IB2016/001151; 19.08.2016 EP 16001833; 16.09.2016 WO PCT/IB2016/001365; 16.09.2016 EP 16002017; 14.10.2016 WO PCT/IB2016/001483; 14.10.2016 EP 16002209; 11.11.2016 WO PCT/IB2016/001636; 11.11.2016 EP 16002380; 09.12.2016 WO PCT/IB2016/001777; 09.12.2016 EP 16002626
(71) Demandeur: Strzyzewski, Patrick, 62170 Neuville sous Montreuil (FR)
(72) Inventeur: Strzyzewski, Patrick, 62170 Neuville sous Montreuil (FR)

(57) **Abrégé**

-Dispositif de Moteur hybride à pistons propulsés par un fluide en pression et débit et ses chemises dotés de chambre de détentes et ses systèmes de chauffage.
-L'invention concerne au moins un moteur hybride avec au moins deux pistons hybride, conjuguant au moins deux énergies, propulsés par un fluide en pression et débit, dont chaque piston est assemblé et monté dans au moins une bague positionnée au moins entre deux chemises avec au moins un chapeau de fermeture, (Fig01 à 30).
-Il est constitué par au moins deux demi-cames de détection circulaire de 240° fixées sur le volant du moteur hybride (Fig31 et Fig32), par au moins deux appareils hydraulique (Fig37 à 40) à commande mécanique ou par des appareils électro mécanique et dont au moins un échangeur thermique composé d'au moins trois parties (Fig35 et Fig36) permet de refroidir au moins un groupe hydraulique et de produire du chauffage, dont la particularité est d'être conçu de manière que les formes intérieures des deux parties intérieurs de l'échangeur thermique seront usinées ou moulées et coulées brut de fonderie pour épouser au moins la forme du corps extérieur d'au moins une pompe hydraulique de tous types, pour permettre la fixation de l'échangeur thermique sur le corps extérieur de cette dernière.
-Le dispositif suivant l'invention est particulièrement destiné aux moteurs hybrides, au chauffage et à d'autres concepts industriels comme la conception de drone (Fig41 à 47), stationnaire ou pouvant se déplacer suivant les six axes, du nord au sud, de l'est à l'ouest et du haut vers le bas ou inversement, technologie qui sera utilisé aussi dans tous les domaines des transports pour déplacer un vélo, une moto, un véhicule etc...., mais aussi entraîner n'importe quel système mécanique ou autre.

## Description

Moteur hybride à pistons hybride propulsés par un fluide en pression et débit et un drone à déplacements Nord ou Sud, Est ou Ouest et haut ou bas et stationnaire.

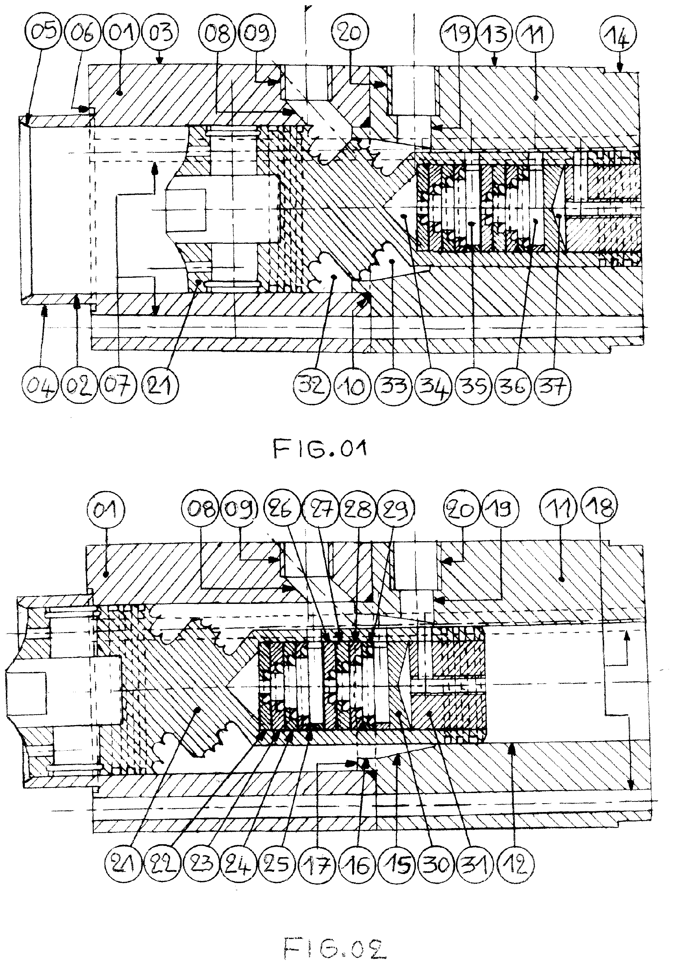

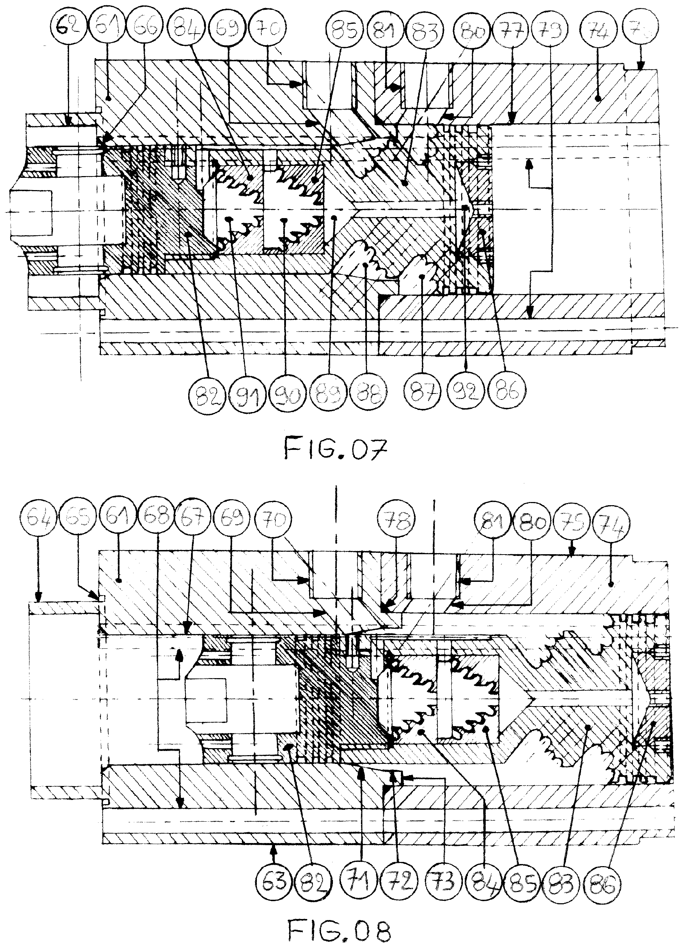

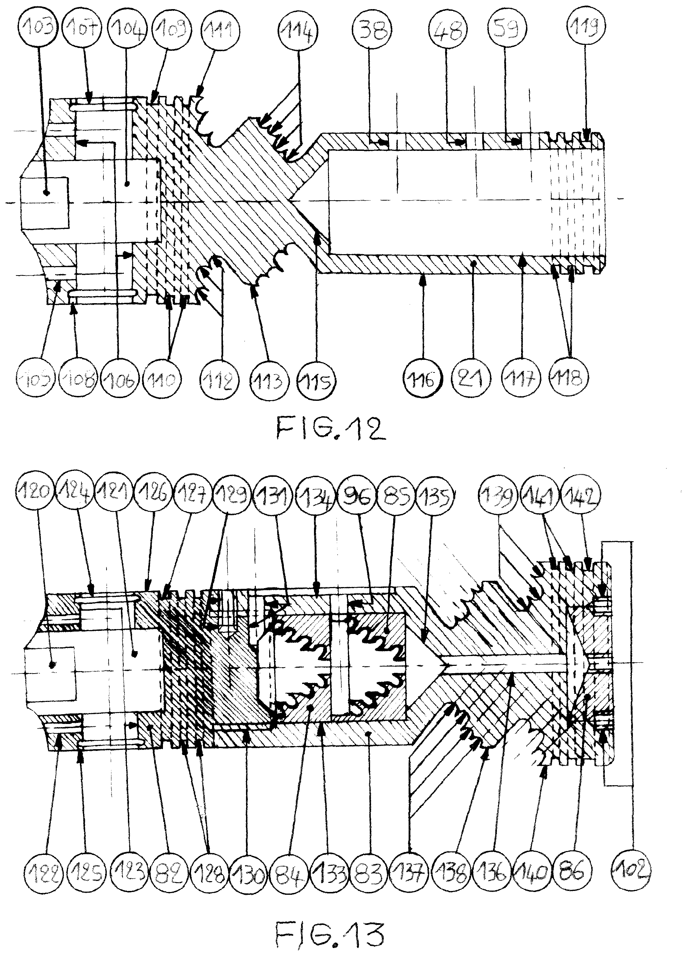

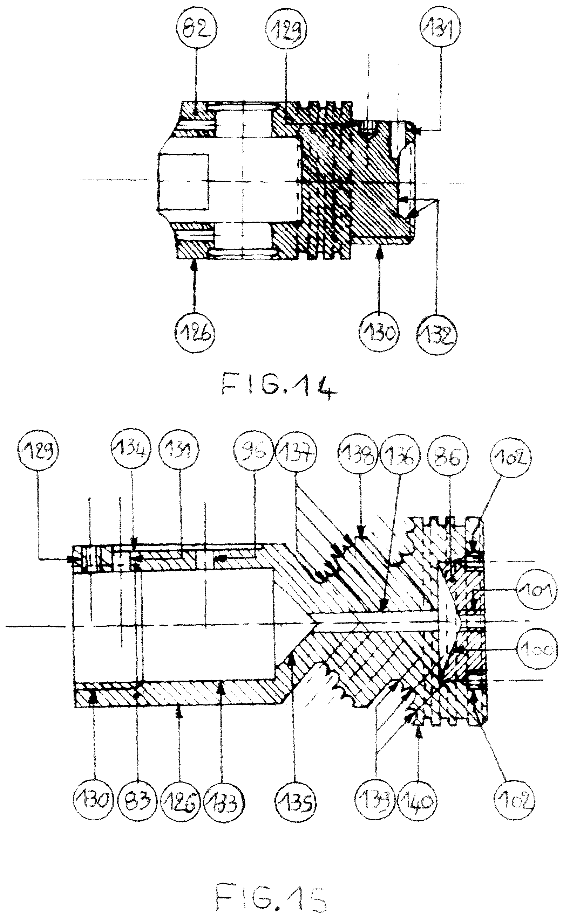

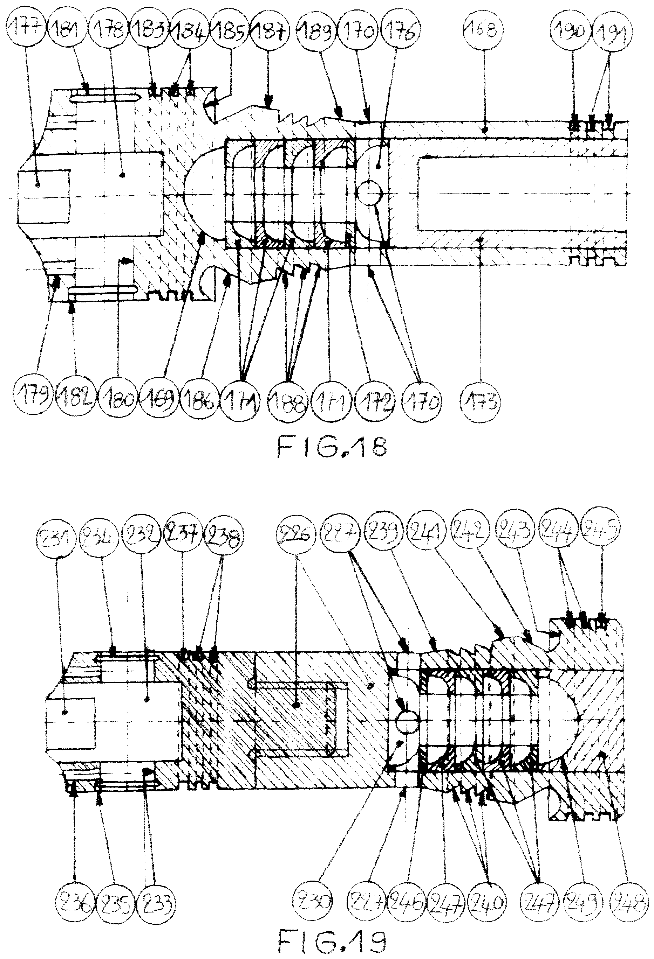

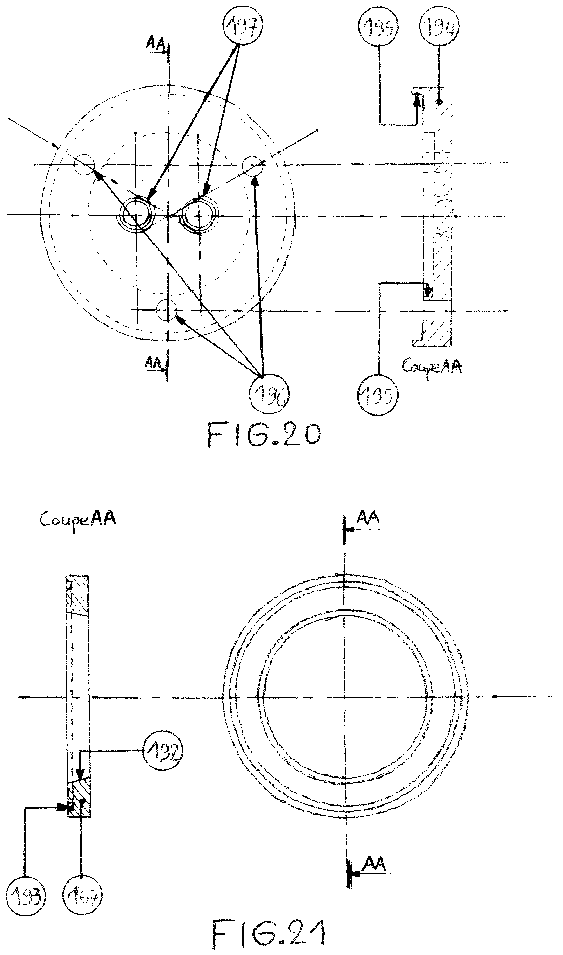

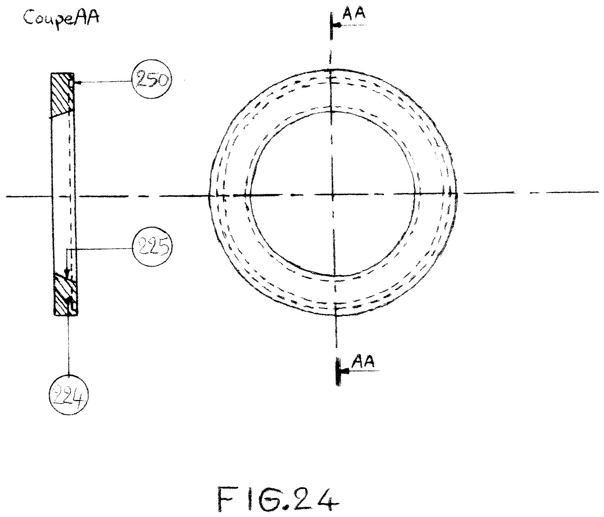

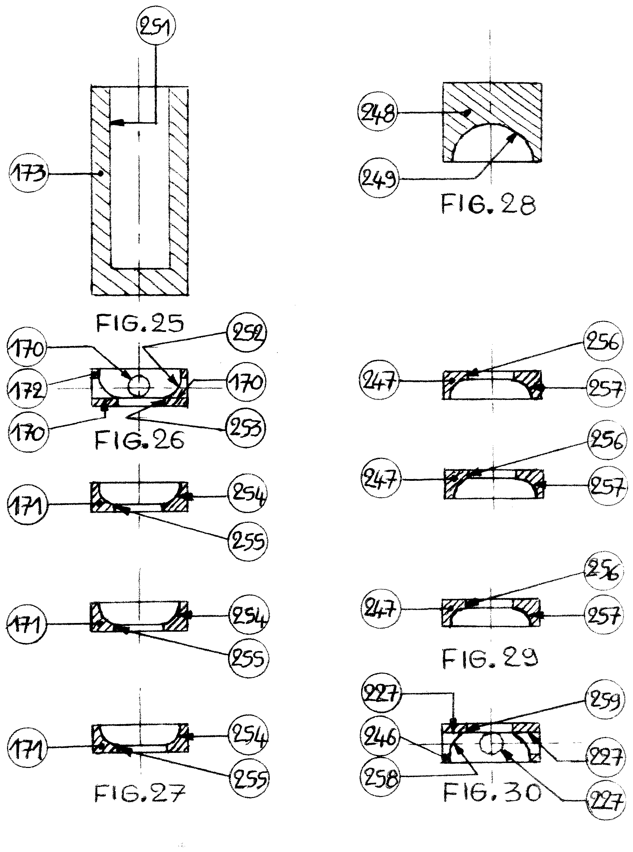

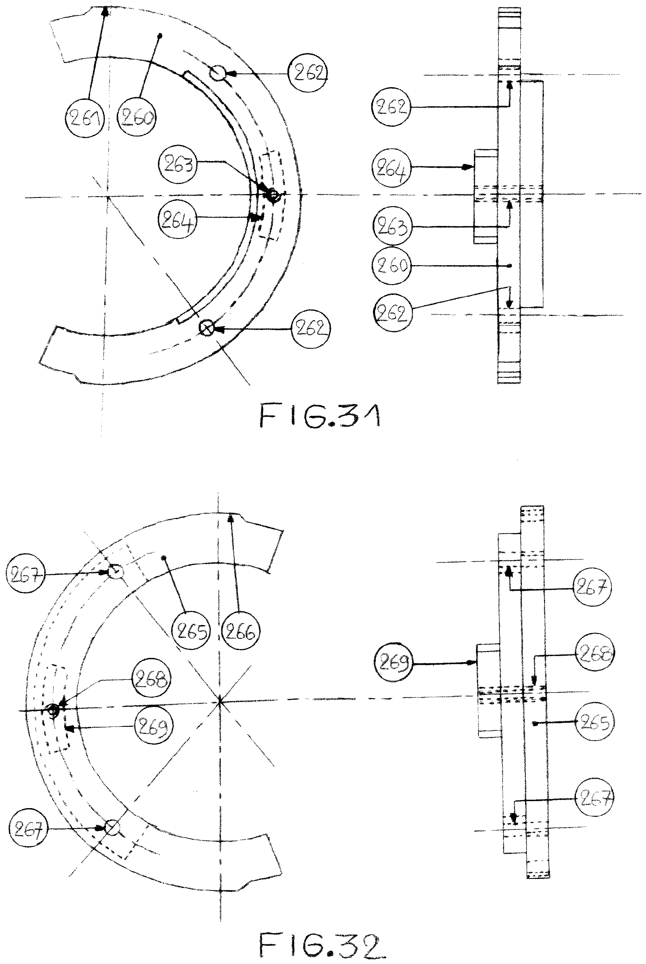

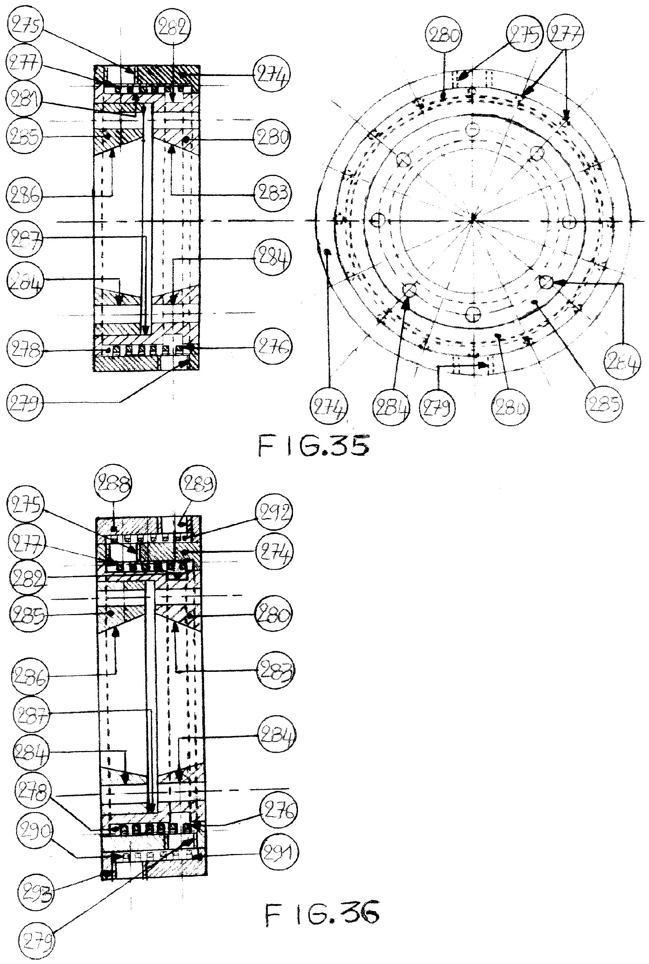

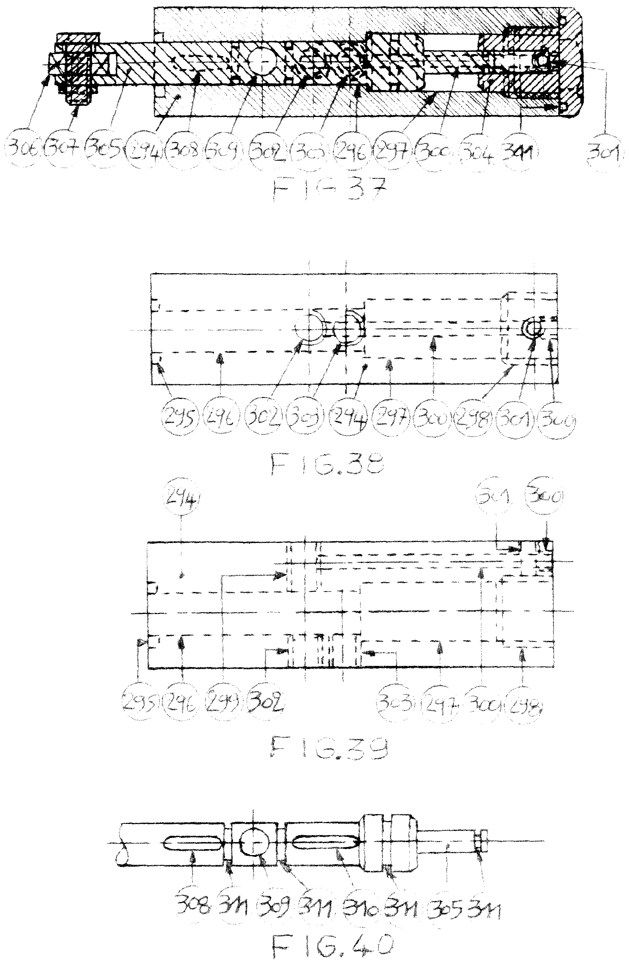

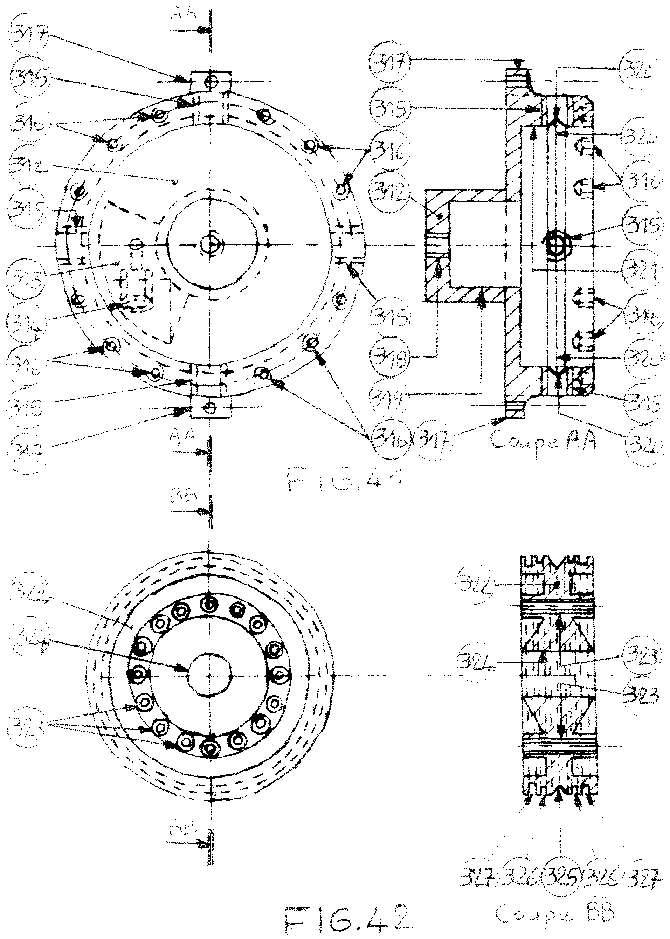

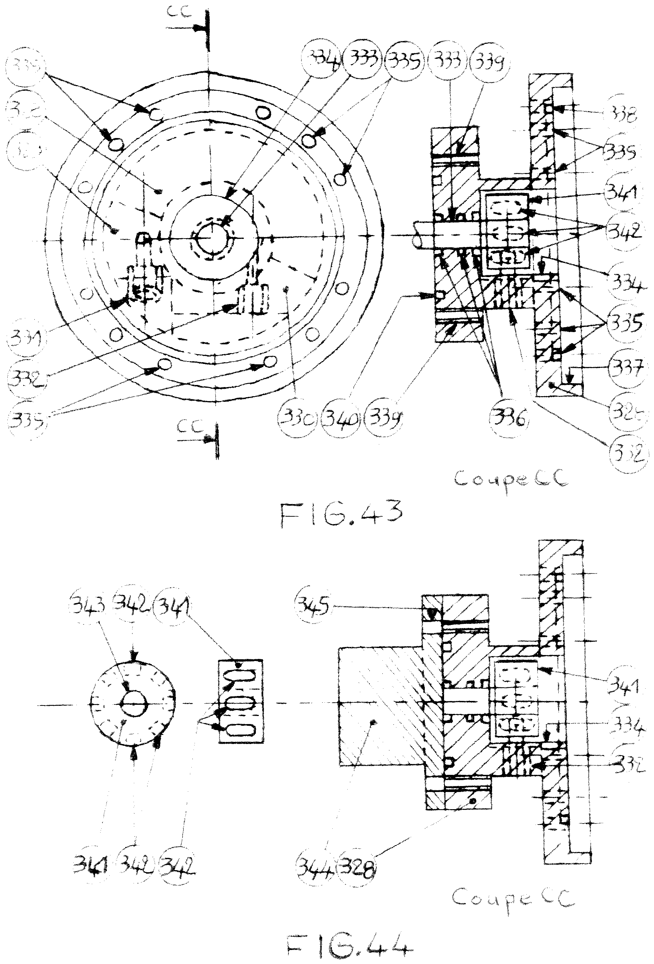

La présente invention concerne au moins un moteur hybride avec au moins deux pistons hybride, conjuguant au moins deux énergies, propulsés par un fluide en pression et débit, dont chaque piston est assemblé et monté dans au moins une bague positionnée au moins entre deux chemises avec au moins un chapeau de fermeture, (Fig01 à 30). Il est constitué par au moins deux demi-cames de détection circulaire de 240° fixées sur le volant du moteur hybride (Fig31 et Fig32), par au moins deux appareils hydraulique (Fig37 à 40) à commande mécanique ou par des appareils électro mécanique et dont au moins un échangeur thermique composé d'au moins trois parties (Fig35 et Fig36) permet de refroidir au moins un groupe hydraulique et de produire du chauffage, dont la particularité est d'être conçu de manière que les formes intérieures des deux parties intérieurs de l'échangeur thermique seront usinées ou moulées et coulées brut de fonderie pour épouser au moins la forme du corps extérieur d'au moins une pompe hydraulique de tous types, pour permettre la fixation de l'échangeur thermique sur le corps extérieur de cette dernière, mais cette pompe hydraulique peut être conçue aussi avec un double corps moulé et coulé brute de fonderie, avec un premier corps ou circule un fluide en pression et débit et dans le deuxième corps extérieur ou circule un deuxième fluide pour produire du chauffage. Le dispositif suivant l'invention est particulièrement destiné aux moteurs hybride, au chauffage et à d'autres concepts industriels comme la conception de drone (Fig41 à 47), stationnaire ou pouvant se déplacer suivant les six axes, du Nord au Sud, de l'Est à l'Ouest et du haut vers le bas ou inversement, technologie qui sera utilisé aussi dans tous les domaines des transports pour déplacer un vélo, une moto, un véhicule etc...., mais aussi entraîner n'importe quel système mécanique ou autre.

Les moteurs thermiques et les systèmes de chauffage sont traditionnellement polluants et consommateurs d'énergie, ils ne répondent pas toujours ou difficilement à la réglementation co², car le contexte d'augmentation des préoccupations environnementales et de renforcement des exigences en matière de développement durable, au niveau international par le protocole de Kyoto et de la cop 21 à Paris ont établi des objectifs et des accords quant à la réduction des gaz à effet de serre et de la pollution co², la facture énergétique représente 88 % du déficit commercial de la France, sans compter les pics de consommation d'énergie, ce qui permet de confirmer que les économies d'énergies et les énergies renouvelables sont les deux axes prioritaires de la politique énergétique, obligeant les fabricants de moteurs thermiques, de radiateurs et de chaudières pour le chauffage central, de revoir leurs stratégies et améliorations en terme de longévité, de nuisance sonore, de pollution et d'économie d'énergie, ce qui à ce jour ils ont des difficultés à atteindre de par les coûts et les contraintes, même si l'OCDE incite les gouvernements à utiliser des dispositifs fiscaux pour stimuler l'innovation environnementale. Ils en est de même pour les drones actuellement sur le marché international, ils doivent répondre à ces exigences, la réglementation devenant de plus en plus stricte à leur égard dans tous les domaines. Par expérience j'ai pu agir sur la cage extérieur d'un roulement avec de l'air comprimé, ce dernier s'est propulsé dans les airs sans pouvoir le retrouver, j'ai pu aussi expérimenter le même phénomène en reliant ces deux roulements par un cordon, ils se sont aussi propulsés dans les airs, avec un mouvement en rotation,
d'où l'expérimentation des drones pour transformer cette inertie en déplacement.

Les dispositifs selon l'invention permettent de remédier à ces inconvénients. Il comporte en effet suivant une première caractéristique un premier ensemble comprenant au moins un moteur hybride avec au moins deux pistons hybride, conjuguant au moins deux énergies, propulsés par un fluide en pression et débit, dont chaque piston est assemblé et monté dans au moins une bague positionnée au moins entre deux chemises ou au moins incorporé dans l'usinage de l'une des deux chemises, avec au moins un chapeau de fermeture, avec au moins un premier piston en point mort haut (21) dans la première chemise point mort haut (11) qui sera propulsé vers le point mort bas dans la première chemise point mort bas (01), entrainant le deuxième piston en point mort bas composé du pied de piston (82) vissé dans la tête du piston (83) qui se retrouve donc en fin d'action de propulsion du premier piston en point mort haut (21), en position point mort bas dans la deuxième chemise en point mort bas (61) pour être à son tour propulsé vers le point mort haut dans la deuxième chemise point mort haut (74) et ainsi de suite de la même manière et qui sont équipés, pour le premier piston en point mort haut (21) et le deuxième piston en point mort bas composé du pied de piston (82) vissé dans la tête du piston (83), ayant tous deux une tête de piston et un pied de piston, dont la particularité est d'être dotée de x rainures usinées, qui recevront au moins un joint d'étanchéité et au moins un segment d'étanchéité et de guidage, le diamètre de la tête du premier piston en point mort haut (21) correspond au premier alésage (12) de la première chemise point mort haut (11) et le diamètre du pied de ce dernier correspond au deuxième alésage (02) de la première chemise point mort bas (01), dont la conception du pied de piston est standard à tous les pistons existants et dont le diamètre du pied de piston devra toujours être supérieur au diamètre de la tête du premier piston en point mort haut (21), pour former avec le deuxième alésage (02), le troisième alésage cylindrique ou légèrement conique (16) ayant la même pente que la première surface conique (15), au moins une première chambre de détente et propulsion (32), dont la forme définit le plus petit volume par au moins une première chemise point mort bas (01) et au moins le troisième alésage cylindrique ou légèrement conique (16) avec un diamètre intérieur ayant au moins un premier diamètre et surface de même cylindricité ou conicité (113) du premier piston en point mort haut (21) dans la première chemise point mort haut (11), le troisième alésage cylindrique ou légèrement conique (16) dans la première chemise point mort haut (11) et le premier diamètre et surface de même cylindricité ou conicité (113) du premier piston en point mort haut (21) sont positionnés entre la première chemise point mort bas (01) suivant le premier chanfrein qui recevra un joint d'étanchéité est emboîtée dans la deuxième chemise point mort (11) et assure l'étanchéité avec au moins une deuxième chambre de détente et propulsion (33), la première bague (31) du premier piston en point mort haut (11) est conçue et usinée comme un cylindre, pour être montée avec un ajustement serrant à l'azote indémontable pour venir bloquer au moins une deuxième bague (30) et au moins un premier empilage de bagues conçu avec une troisième bague (29), une quatrième bague (28), une cinquième bague (27) et une sixième bague (26), ce premier empilage de bague peut être remplacé par une bague unique comme (85) et avec au moins un deuxième empilage de bagues conçu avec une septième bague (25), une huitième bague (24), une neuvième bague (23) et une dixième bague (22), dont ce deuxième empilage de bagues peut être aussi remplacé par une bague unique comme (85) l'ensemble de ces bagues étant montées dans le quatrième alésage (117) du premier piston en point mort haut (21) et formant au moins une troisième chambre de détente et propulsion (37), une quatrième chambre de détente et propulsion (36), une cinquième chambre de détente et propulsion (35) et une sixième chambre de détente et propulsion (34) qui communique par un premier perçage (59), un deuxième perçage (48), un troisième perçage (38) et un quatrième perçage (47) avec la deuxième chambre de détente et propulsion (33) et dans la première chambre de détente et propulsion (32), après la propulsion vers le point mort bas du premier piston en point mort haut (21), pour y acheminent un fluide en pression et débit.

Avec au moins un deuxième piston en point mort bas composé du pied de piston (82) vissé dans la tête du piston (83), dont sa particularité est d'être conçue en deux parties, doté d'un pied de piston qui est vissé dans la tête de ce dernier et bloqué en rotation, pour pouvoir le monter et l'assembler dans la deuxième chemise point mort bas (61) et qui sera propulsé vers le point mort haut dans la deuxième chemise point mort haut (74), entrainant à son tour avec lui le premier piston en point mort haut (21), qui se retrouve donc en fin d'action de propulsion du deuxième piston en point mort bas composé du pied de piston (82) vissé dans la tête du piston (83), en position point mort haut dans la première chemise point mort haut (11) pour être à son tour propulsé vers le point mort bas dans la première chemise point mort bas (01) et ainsi de suite de la même manière et dont le deuxième piston en point mort bas composé du pied de piston (82) vissé dans la tête du piston (83), dont la particularité du pied et de la tête de piston sont d'être dotés de x rainures usinées, qui recevront au moins un joint d'étanchéité et au moins un segment d'étanchéité et de guidage, le diamètre de la tête du deuxième piston en point mort bas (83) correspond au quatrième alésage (77) de la deuxième chemise point mort haut (74) et le diamètre du pied de piston (82) correspond à l'alésage de la deuxième chemise point mort bas (61), dont la conception du pied de piston est standard à tous les pistons existants et dont le diamètre du pied de piston (82) du deuxième piston en point mort bas devra toujours être inférieur au diamètre de la tête de piston (83) du deuxième piston en point mort bas, pour former avec le cinquième alésage (77), le sixième alésage cylindrique ou légèrement conique (72) ayant la même pente que la deuxième surface conique (71), au moins une sixième chambre de détente et propulsion (87), dont la forme définit le plus petit volume par au moins une deuxième chemise point mort haut (74) et au moins le sixième alésage cylindrique ou légèrement conique (72) avec un diamètre intérieur ayant au moins un deuxième diamètre et surface de même cylindricité ou conicité (138) du deuxième piston en point mort bas composé du pied de piston (82) vissé dans la tête du piston (83), dans la deuxième chemise point mort bas (61), le sixième alésage cylindrique ou légèrement conique (72) dans la deuxième chemise point mort bas (61) et le deuxième diamètre et surface de même cylindricité ou conicité (138) du deuxième piston en point mort bas composé du pied de piston (82) vissé dans la tête de piston (83) sont positionnés entre la deuxième chemise point mort haut (74) suivant le deuxième chanfrein (78) qui recevra un joint d'étanchéité est emboîtée dans la deuxième chemise point mort bas (61) et assure l'étanchéité avec au moins une septième chambre de détente et propulsion (88), la onzième bague (86) du deuxième piston en point mort bas composé du pied de piston (82) vissé dans la tête de piston (83) est conçue et usinée comme un cylindre, pour être montée avec un ajustement serrant à l'azote indémontable dans la tête de piston (83) du deuxième piston en point mort bas, au moins une douzième bague (85) et au moins une treizième bague (84) dont l'ensemble de ces deux dernières bagues sont montées dans le septième alésage (133) du pied de piston (83) et formant au moins une huitième chambre de détente et propulsion (91), une neuvième chambre de détente et propulsion (90), une dixième chambre de détente et propulsion (89) et une onzième chambre de détente et propulsion (92) qui communique par un cinquième perçage (136), un sixième perçage (94), un septième perçage (96), un huitième perçage (98)et un neuvième perçage (131) avec la septième chambre de détente et propulsion (88) et dans la sixième chambre de détente et propulsion (87), après la propulsion vers le point mort haut du deuxième piston en point mort bas composé du pied de piston (82) vissé dans la tête du piston (83), pour y acheminent un fluide en pression et débit.

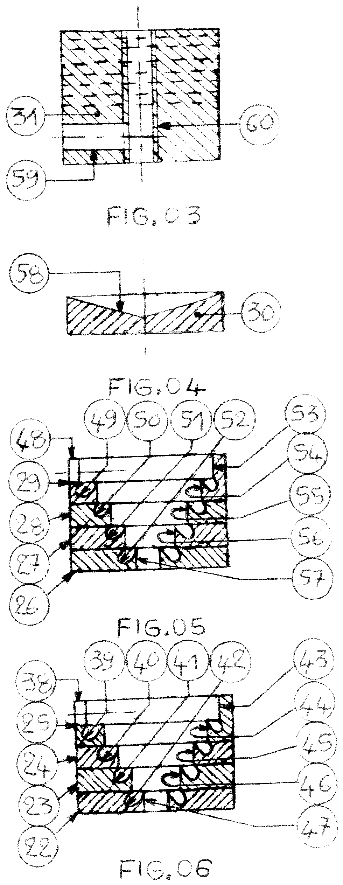

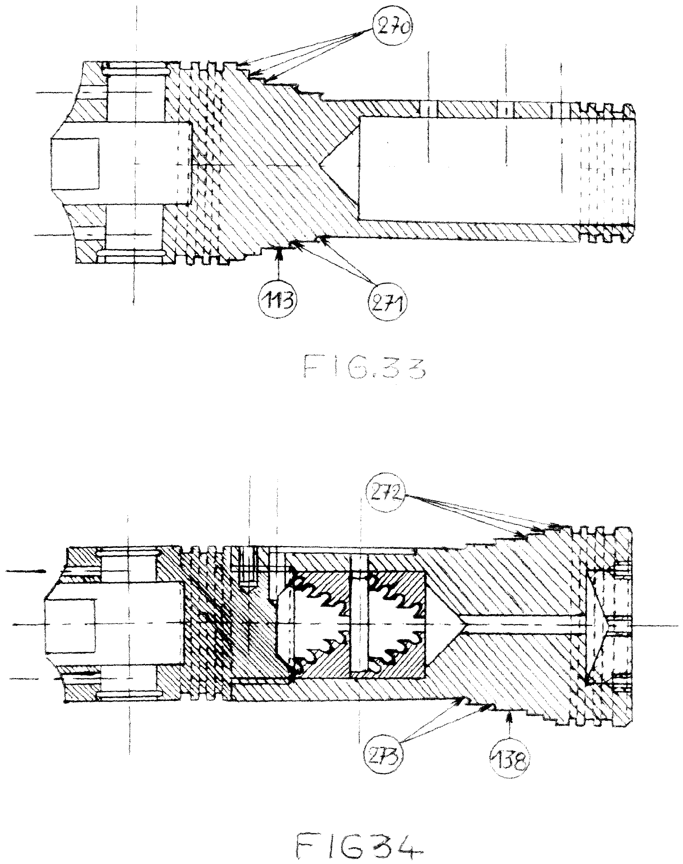

Selon ces modes particuliers de réalisation d'au moins un premier piston en point mort haut (21) et d'au moins un deuxième piston en point mort bas composé du pied de piston (82) vissé dans la tête du piston (83), dont la particularité du premier perçage taraudé (60) et du deuxième perçage taraudé (101) sont de permettre de purger et chasser l'air dans toutes les chambres de détente et propulsion avant fonctionnement, on bouchera ces perçages taraudages par des vis pointeaux sans tête. La troisième surface conique (58), la quatrième surface conique (115), la cinquième surface conique (100) et la sixième surface conique (135) permettent d'augmenter la force de poussée sur ces surfaces coniques par l'action du fluide en pression et débit. Des saignées circulaires à 45° à fond arrondi en forme d'escalier sont réalisées et usinées sur le premier piston en point mort haut (21) et sur le deuxième piston en point mort bas composé du pied de piston (82) vissé dans la tête du piston (83), suivant les premières saignées circulaires à 45° à fond arrondi en forme d'escalier (112), les deuxièmes saignées circulaires à 45° à fond arrondi en forme d'escalier (114), les troisièmes saignées circulaires à 45° à fond arrondi en forme d'escalier (137) et les quatrièmes saignées circulaires à 45° à fond arrondi en forme d'escalier (139) la aussi dans le but d'augmenter la force de poussée sur ces surfaces par l'action du fluide en pression et débit. Au moins une douzième bague (85) et au moins une treizième bague (84) auront aussi Des saignées circulaires à 45° à fond arrondi en forme d'escalier qui sont réalisées et usinées à l'intérieur de la douzième bague (85) et la treizième bague (84) suivant les cinquièmes saignées circulaires à 45° à fond arrondi en forme d'escalier (95) et les sixièmes saignées circulaires à 45° à fond arrondi en forme d'escalier (99), les autres saignées circulaires à 45° à fond arrondi en forme d'escalier seront aussi réalisées et usinées de la même manière suivant les Fig.05 et 06. La (Fig33) et la (Fig34) font apparaître des autres formes réalisées et usinées suivant les premières formes conçues en escalier avec des marches et contre marches (270) ou les deuxièmes formes avec des vagues creuses et contre marches (271) sur le premier piston en point mort haut (21) et suivant les troisièmes formes conçues en escalier avec des marches et contre marches (272) ou les quatrièmes formes avec des vagues creuses et contre marches (273) sur le deuxième piston en point mort bas composé du pied de piston (82) vissé dans la tête du piston (83).

Selon le mode particulier du premier ensemble ci-dessus défini et un autre mode particulier d'un deuxième ensemble défini ci dessous comprenant au moins un moteur hybride avec au moins deux pistons hybride, conjuguant au moins deux énergies, propulsés par un fluide en pression et débit, dont chaque piston est assemblé et monté dans au moins une bague positionnée au moins entre deux chemises avec au moins un chapeau de fermeture et au moins une première demi-cames de détection circulaire de 240° (260) et une deuxième demi-cames de détection circulaire de 240° (265) fixées sur le volant du moteur hybride (Fig31 et Fig32) dotées chacune d'au moins une première piste de détection (261) et une deuxième piste de détection (266), qui permettent une action direct ou indirect par l'intermédiaire d'au moins un galet sur au moins un premier appareil hydraulique à commande mécanique (Fig37) par piste de détection ou par au moins un premier appareil à commande électro mécanique par piste de détection pour alimenter au moins la bobine d'un premier appareil hydraulique pour acheminer le fluide en pression et débit vers au moins une première chambre de détente et propulsion (174) d'au moins un premier piston en point mort haut (168), assemblé et monté dans au moins une première bague positionnée au moins entre une première chemise point mort haut (156) et une deuxième chemise point mort bas (143) avec au moins un premier chapeau de fermeture (194) et dont au moins un des deux pistons doit obligatoirement être en dépressurisation, alors que l'autre est en pression et dont au moins un premier échangeur thermique composé d'au moins trois parties (Fig35) ou au moins un deuxième échangeur thermique composé d'au moins quatre parties (Fig36) permettent de refroidir au moins un groupe hydraulique et de produire du chauffage, dont la particularité est d'être conçu de manière que les formes intérieures de la première partie intérieure (280) et de la deuxième partie intérieure (285) du premier échangeur thermique (Fig35) ou du deuxième échangeur thermique (Fig36)seront usinées ou moulées et coulées brut de fonderie pour épouser au moins la forme du corps extérieur d'au moins une pompe hydraulique de tous types, pour permettre la fixation du premier échangeur thermique (Fig35) ou du deuxième échangeur thermique (Fig36 sur le corps extérieur de cette dernière.

Au moins un premier piston en point mort haut (168) dans la première chemise point mort haut (156) sera propulsé vers le point mort bas dans la première chemise point mort bas (143), entrainant le deuxième piston en point mort bas (226) qui se retrouve donc en fin d'action de propulsion du premier piston en point mort haut (168), en position point mort bas dans la deuxième chemise point mort bas (198) pour être à son tour propulsé vers le point mort haut dans la deuxième chemise point mort haut (214) et ainsi de suite de la même manière et qui sont équipés pour le premier piston en point mort haut (168) et le deuxième piston en point mort bas (226), d'une tête de piston et d'un pied de piston, dont la particularité est d'être dotée de x rainures usinées, qui recevront au moins un joint d'étanchéité et au moins un segment d'étanchéité et de guidage, le premier diamètre de la tête du premier piston en point mort haut (168) correspond au premier alésage (159) de la première chemise point mort haut (156) et le deuxième diamètre du pied de ce dernier correspond au deuxième alésage (147) de la première chemise point mort bas (143), dont la conception du pied de piston est standard à tous les pistons existants et dont le deuxième diamètre du pied du premier piston en point mort haut (168) devra toujours être supérieur au premier diamètre de la tête de ce dernier, pour développer au moins un troisième diamètre extérieur avec une surface conique (187) et au moins une première chambre de détente et propulsion (174), dont la forme définit le plus petit volume par au moins une première chemise point mort bas (143) et au moins une première bague (167) avec un quatrième diamètre intérieur ayant au moins une surface de même conicité (192) et le premier piston en point mort haut (168) dans la première chemise point mort haut (156), cette première bague (167) positionnée entre ces deux chemises, assure l'étanchéité avec au moins une deuxième chambre de détente et propulsion (175), la deuxième bague (173) du premier piston en point mort haut (168) est conçue et usinée comme un cylindre creux et fermé en son fond, pour être montée avec un ajustement serrant à l'azote indémontable pour venir bloquer au moins une troisième bague (172) et au moins une quatrième bague (171), dans au moins une troisième chambre de détente et propulsion (176), qui communique par des premiers perçages (170) avec la deuxième chambre de détente et propulsion (175) pour y acheminent un fluide en pression et débit.

Pour le deuxième piston en point mort bas (226), sa particularité est d'être conçue en deux parties, doté d'un pied de piston qui est vissé dans la tête de ce dernier et bloqué en rotation, pour pouvoir le monter et l'assembler dans la cinquième bague (224) positionnée entre la deuxième chemise point mort bas (198) et la deuxième chemise point mort haut (214), le cinquième diamètre de la tête du deuxième piston en point mort bas (226) correspond et coulisse dans le troisième alésage (218) de la deuxième chemise point mort haut (214) et le sixième diamètre du pied de ce dernier correspond et coulisse dans le quatrième alésage (205) de la deuxième chemise point mort bas (198), dont la conception du pied de piston est standard à tous les pistons existants, mais le sixième diamètre du pied de piston devra toujours être inférieur au cinquième diamètre de la tête du deuxième piston en point mort bas (226), pour développer au moins un septième diamètre extérieur avec une surface conique (241) et au moins une quatrième chambre de détente et propulsion (228), dont la forme est définie par le plus petit volume par au moins une deuxième chemise point mort bas (198) et au moins une cinquième bague (224) avec un huitième diamètre intérieur ayant au moins une surface de même conicité (225) et le deuxième piston en point mort bas (226) dans la deuxième chemise point mort haut (214), cette cinquième bague (224) positionnée entre ces deux chemises, assure l'étanchéité avec au moins une cinquième chambre de détente et propulsion (229), la cinquième bague (248) du deuxième piston en point mort bas (226) est conçue et usinée comme un cylindre fermé, pour être montée avec un ajustement serrant à l'azote indémontable pour venir bloquer au moins une sixième bague (246) et au moins une septième bague (247), dans au moins une sixième chambre de détente et propulsion (230), qui communique par des deuxièmes perçages (227) avec la cinquième chambre de détente et propulsion (229), pour y acheminent un fluide en pression et débit.

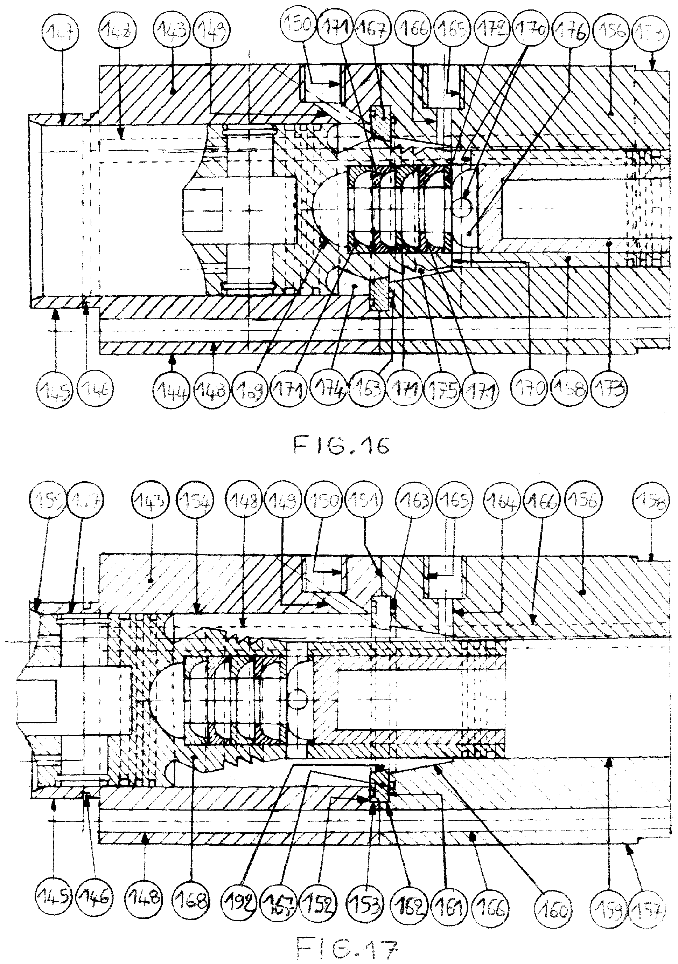

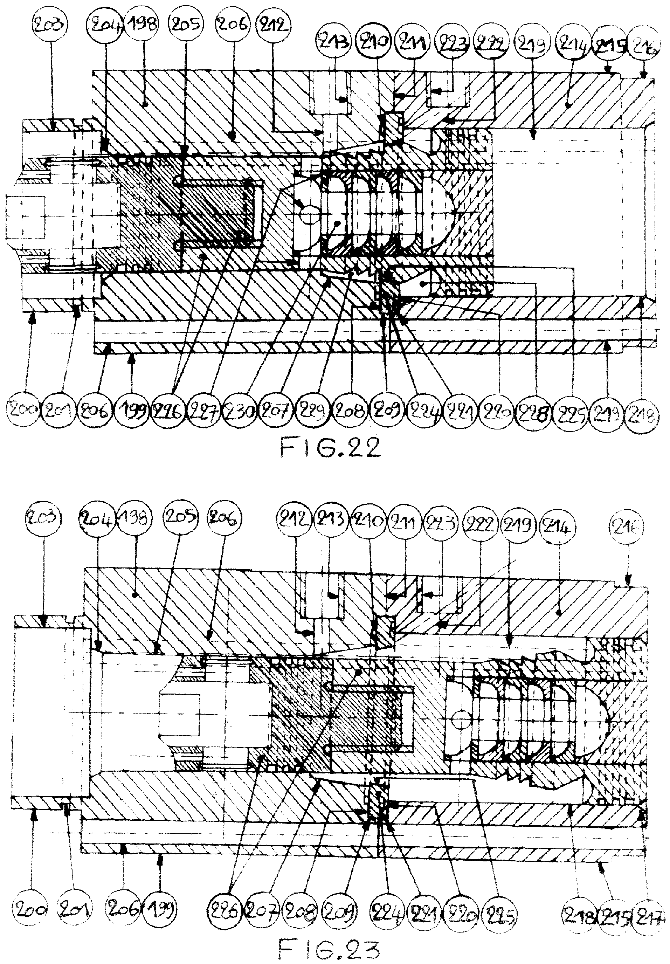

Les ensembles des chemises, bagues et pistons (Fig16 à Fig30), dont la particularité de ce premier ensemble (Fig16) et ce deuxième ensemble (Fig22) sont d'être dotés d'au moins trois chambres de détente et de propulsion dont le fluide en pression et débit y est acheminé et communique avec ces trois chambres de détente et de propulsion, par des perçages taraudés et perçages, dont un troisième perçage taraudé (150) et un quatrième perçage (149) et un cinquième perçage taraudé (165) et un sixième perçage (166) suivant le premier ensemble (Fig16) et dont un septième perçage taraudé (213) et un huitième perçage (212) et un neuvième perçage taraudé (223) et un dixième perçage (222) suivant le deuxième ensemble (Fig22), pour recevoir des raccords et tuyauteries et des perçages pour y acheminer le fluide en pression et débit, qui sont positionnés sur tous les pistons, sur toutes les chemises point mort bas et toutes les chemises point mort haut de ces ensembles, de part et d'autre de la bague positionnée entre les deux chemises de chaque ensemble, qui propulsera le premier piston en point mort haut (168) (Fig16) vers le point mort bas, pour propulser ensuite le deuxième piston en point mort bas (226) (Fig22) vers le point mort haut et ainsi de suite à chaque tour de vilebrequin du moteur hybride. La première bague (167), montre un quatrième diamètre intérieur avec une surface conique usinée (192), qui viendra assurer l'étanchéité avec le troisième diamètre extérieur de la surface conique usinée (187) du premier piston en point mort haut (168) entre la première chambre de détente et propulsion (174) et la deuxième chambre de détente et propulsion (175) de la première chemise point mort haut (156) et de la première chemise point mort bas (143), on peut usiner et réaliser dans la matière des chemises, la forme de la première bague (167) et de la cinquième bague (224), si cela est possible, le premier piston en position point mort haut (168) dans la première chemise point mort bas (143) et la première chemise point mort haut (156), va se propulser librement vers le point mort bas, sous l'action et l'entraînement du deuxième piston en point mort bas (226) et qui va être propulsé vers le point haut par le fluide en pression et débit, à condition et seulement lorsque le premier piston en position point mort haut (168) sera dépressurisé, on utilise alors au moins un premier et un deuxième appareil hydraulique qui seront alternativement commandés et pilotés instantanément mécaniquement ou par bobine électro magnétique ou non commandés et pilotés et en même temps pour mettre le deuxième piston en point mort bas (226) en pression et débit alors que le premier piston en point mort haut (168) sera mis en dépressurisation et inversement.

Dont la particularité de ces surfaces conique désignées ci dessus sont réalisées et usinées de manière que le volume des chambres de détente et propulsion dans le premier et deuxième ensemble chemises, pistons, bagues et chapeaux, devront être le plus petit possible pour permettre une mise en pression et débit instantanée, mais aussi une dépressurisation rapide de ces trois chambres par ensemble, dont seul les surfaces coniques permettent de réaliser le fonctionnement et la propulsion, par l'intermédiaire et grâce uniquement aux trois chambres de détente et propulsion du premier et deuxième ensemble (Fig22), dont la particularité du premier ensemble (Fig16) et d'être doté d'une première rainure cylindrique (163) sur la première chemise point mort haut (156), d'une deuxième rainure cylindrique (193) sur la première bague (167) et d'une troisième rainure cylindrique (146) sur la première chemise point mort bas (143) qui recevront un joint pour assurer l'étanchéité par rapport au fluide en pression et débit, un premier joint plat cylindrique (151) entre la première chemises point mort haut (156) et la première chemise point mort bas (143) viendra renforcer l'étanchéité, mais des joints plat cylindrique pourront aussi remplacer les rainures cylindrique désignées ci dessus pour assurer l'étanchéité, trois onzième perçages (148) sur la première chemise point mort bas (143) et trois douzième perçages (166) sur la première chemise point mort haut (156), ainsi que les trois treizième perçages (196) du chapeau de fermeture (194) seront positionnés à 120° l'un de l'autre suivant le même diamètre circulaire sur ces chemises et le chapeau de fermeture désignés ci-dessus et idem pour les trois quatorzième perçages (206) sur la deuxième chemise point mort bas (198) et les trois quinzième perçages (219) sur la deuxième chemise point mort haut (214), ainsi que les trois treizième perçages (196) du chapeau de fermeture (194) seront positionnés à 120° l'un de l'autre suivant le même diamètre circulaire sur ces chemises et le chapeau de fermeture désignés ci-dessus, qui recevront des tirants filetés à chaque extrémité, dont une extrémité fileté sera vissée sur le bloc moteur et l'autre extrémité des tirants filetés permettra par l'intermédiaire d'écrou de serrer au couple chaque tirant pour permettre l'assemblage et le serrage de ces chemises, de cette bague et du chapeau de fermeture au couple.

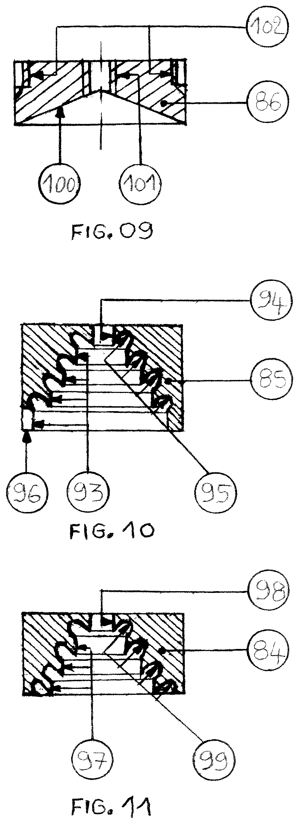

Le deuxième assemblage composé de la deuxième chemise point mort bas (198), de la deuxième chemise point mort haut (214), du deuxième piston en point mort bas (226) et de la deuxième bague (224) (Fig22), présente ce deuxième piston en position point mort bas, dont la particularité est d'être doté d'une quatrième rainure cylindrique (210) sur la deuxième chemise point mort bas (198), d'une cinquième rainure cylindrique (250) sur la deuxième bague (224) et d'une sixième rainure cylindrique (201) sur la deuxième chemise point mort bas (198) qui recevront un joint pour assurer l'étanchéité, un deuxième joint plat cylindrique (211) entre la deuxième chemise point mort bas (198) et la deuxième chemise point mort haut (214) viendra renforcer l'étanchéité. mais des joints plat cylindrique pourront aussi remplacer les rainures cylindrique désignées ci dessus, pour assurer l'étanchéité, la deuxième bague (224) (Fig09), montre un cinquième diamètre intérieur avec une surface conique usinée (225), inverse au quatrième diamètre intérieur de la surface conique usinée (192) de la première bague (167) qui viendra assurer l'étanchéité avec le diamètre extérieur de la surface conique usinée (241) du deuxième piston en point mort bas (226) entre la quatrième chambre de détente et propulsion (228) et la cinquième chambre de détente et de propulsion (229) de la deuxième chemise point mort bas (198) et de la deuxième chemise point mort haut (214).

Une première demi-came de détection (260) et une deuxième demi-came (265) de forme circulaire à 240° (Fig31 à Fig32) après réglage sont fixées sur le volant du moteur, un premier tenon (264) fixé sur la première demi-came (260) et un deuxième tenon (269) fixé sur la deuxième demi-came (265) permettent de les faire coulisser dans des rainures circulaire positionnées sur le volant moteur pour permettre le réglage en position de la première piste de détection (261) et de la deuxième piste de détection (266) par rapport au point mort haut et bas du premier piston en point mort haut (168) et du deuxième piston en point mort bas (226) d'au moins un moteur hybride à deux cylindres et d'au moins un premier et deuxième appareils hydraulique (Fig37) à commande mécanique ou à commande par bobine électro magnétique, dont la particularité de la première et deuxième demi-came sont d'être dotées d'une première et deuxième piste de détection indépendantes l'une de l'autre et parallèle, dont l'une correspond à la position du premier piston en point mort haut (168) et l'autre au deuxième piston en point mort bas (226) suivant leur position en point mort bas ou haut, cette première et deuxième demi-cames ont la même épaisseur, mais sont usinées avec deux épaulements de dimensions identiques mais inversées, qui correspond à la piste de détection de l'une et de l'autre, cette première et deuxième demi cames de détection de forme circulaire de 240° ont un dégagement angulaire de 60° à chacune de leurs extrémités qui correspond à la moitié de l'épaisseur de cette première et deuxième demi came et de cette première et deuxième piste de détection qui sont l'une à coté de l'autre, ces dégagements angulaire de 60°, permettent de faire chevaucher en rotation la première et deuxième demi-cames l'une sur l'autre, suivant les angles de 60°, pour ajuster le réglage de la détection et de sa coupure, par rapport à la longueur de la première et deuxième piste de détection et du point mort haut et bas du premier piston en point mort haut (168) et du deuxième piston en point mort bas (226), le diamètre intérieur de la première et deuxième demi-came est ajusté et correspond au diamètre extérieur de l'épaulement correspondant au logement du disque d'embrayage du volant moteur pour leur centrage.

Le premier et deuxième échangeur thermique (Fig35 à Fig36) est composé d'au moins trois parties, une première partie (274), une deuxième partie (285) et une troisième partie (280), dont la particularité de la première partie (274) est d'être un corps extérieure en forme de couronne usinée et montée avec un ajustement serrant à l'azote indémontable sur la deuxième partie (285), pour assurer une étanchéité totale après montage, cette première partie (274) est dotée d'un premier perçage taraudé d'entrée (275) qui recevra un raccord et une tuyauterie, d'où viendra le fluide, cette première partie aura plusieurs premières ailettes usinées (276), qui seront ajustés avec du jeu dans la première cloison (278) de circulation du fluide de la deuxième partie (285), ces premières ailettes (276) seront percées par une multitude de premiers perçages (277), ces premières ailettes usinées (276) et premiers perçages (277) permettront la circulation du fluide par le premier perçages taraudé d'entrée (275) vers le deuxième perçage taraudé de sortie (279), la deuxième partie (285) est dotée d'une première rainure circulaire (282) communiquant dans la première cloison (278), pour augmenter le volume en circulation du fluide, une troisième partie (280) est usinée en ajustement glissant juste dans le premier alésage (287) de la deuxième partie (285), pour permettre l'assemblage de la première, de la deuxième et de la troisième partie constituant l'échangeur thermique sur le corps extérieur de la pompe hydraulique qui est de forme conique, par l'intermédiaire de tirants, tiges filetées ou vis suivant les deuxièmes perçages usinés (284) dans la deuxième et troisième partie, la première forme conique (286) de la deuxième partie (285) et la deuxième forme conique (283) de la troisième partie (280) sont ajustées avec serrage et épouse la double paroi conique de la pompe hydraulique, les trois parties constituant cet échangeur thermique est en matière aluminium ou autre, pour permettre un échange rapide et performant de la chaleur thermique de la pompe hydraulique vers l'échangeur thermique, dont le fluide en circulation va capter l'énergie thermique et la faire circuler.

L'on peut ajouter une quatrième partie supplémentaire (288), pour augmenter la capacité thermique et le rendement calorifique de ce deuxième échangeur thermique, dont la particularité de la quatrième partie supplémentaire (288) est d'être usinée et montée avec un ajustement serrant à l'azote indémontable sur la première partie (274), pour assurer une étanchéité totale après montage, cette quatrième partie supplémentaire est dotée d'un troisième perçage taraudé d'entrée (289) qui recevra un raccord et une tuyauterie d'où viendra le fluide, cette quatrième partie supplémentaire (288) aura plusieurs deuxièmes ailettes (290) usinées qui seront ajustées avec du jeu dans la deuxième cloison (292) de circulation du fluide, ces deuxièmes ailettes (290) seront percées par une multitude de troisièmes perçages (291), ces deuxièmes ailettes (290) et ces troisièmes perçages (291) permettront la circulation du fluide par le troisième perçage taraudé d'entrée (289) vers le quatrième perçage taraudé de sortie (293) qui recevra un raccord et une tuyauterie, d'où sortira le fluide, une deuxième rainure supplémentaire sur la troisième partie (280) pourra être réalisée et usinée de la même manière que la rainure circulaire (282) sur la troisième partie (280) pour augmenter le volume du fluide circulant dans la cloison (292).

Selon le mode particulier d'un premier ensemble et d'un deuxième ensemble comprenant au moins un moteur hybride avec au moins deux pistons hybride, conjuguant au moins deux énergies, propulsés par un fluide en pression et débit, dont chaque piston est assemblé et monté dans au moins une bague positionnée au moins entre deux chemises avec au moins un chapeau de fermeture, avec au moins deux appareils hydraulique identique par ensemble, dont la particularité pour le premier ou deuxième appareil hydraulique est de permettre la mise en pression et débit d'un circuit par l'alignement et l'intermédiaire du premier perçage taraudé (299) du premier corps (294), du premier perçage (309) du premier axe (305) et du deuxième perçage taraudage (302) du premier corps (294), quand le premier axe (305) est actionné par un système mécanique à galet (306) ou autre ou par un appareil à bobine électro magnétique ouvrant le circuit et quand le premier axe (305) n'est plus actionné et revient en position repos par l'intermédiaire d'un pilotage interne communiquant par le premier perçage taraudage (299), le troisième perçage taraudé (300) et le quatrième perçage taraudé (301) pour repousser le premier axe (305), dont la particularité est de permettre la dépressurisation du circuit en liaison avec le deuxième perçage taraudé (302) qui communique alors par l'intermédiaire de la premier rainure (310) du premier axe (305) avec le cinquième perçage taraudage (303) qui met en dépressurisation le circuit par l'intermédiaire d'un filtre retour directement dans le réservoir hydraulique. Le guidage en translation et blocage en rotation du premier axe (305) se fait par l'intermédiaire de la deuxième rainure (308) du premier axe (305) et d'une vis à téton vissé dans le premier corps (294), des troisièmes rainures (311) sur le premier axe (305) assurent l'étanchéité par des joints d'étanchéité avec le premier alésage (296), le deuxième alésage (297) du premier corps (294) et l'alésage du premier bouchon (304) ou coulisse le premier axe (305) dont le premier bouchon est vissé dans le premier corps (294) par l'intermédiaire du sixième perçage taraudage (298), le quatrième perçage taraudé (301) communique avec l'alésage du premier bouchon (304) ou coulisse le premier axe (305) pour repousser ce dernier en position repos, le premier logement circulaire (295) dans le premier corps (294) assure l'étanchéité par un joint d'étanchéité entre le premier axe (305) et le premier corps (294).

selon le premier mode particulier d'une technologie devant s'inscrire dans le contexte de l'invention comprenant au moins un premier drone (Fig41 à 44) comprenant au moins un premier corps (312) dont la matière est la plus légère possible tout en ayant la plus grande résistance mécanique, un premier bossage (313) permettra de réaliser un premier perçage taraudage (314) à 45° vers l'intérieur du premier corps (312), les deuxièmes perçages taraudage (315) à 90° sur le premier corps (312) débouchent à l'intérieur du premier corps (312) et communique dans un premier vé circulaire (320) usiné sur le premier alésage (321), le troisième perçage taraudage (318) correspond à l'aspiration de la pompe hydraulique en position basse, définissant le volume par le deuxième alésage (319), des premières pattes de fixation (317), permettront de fixer le premier corps (312) sur tous les supports, les quatrièmes perçages taraudage (316), permettront de fixer la première plaque de fermeture (328), une première roue (322) dont la matière est la plus légère possible tout en ayant la plus grande résistance mécanique, des premiers pied de centrage creux (323) montés suivant des perçages positionnés circulaires en ajustement serrant par dilation dans la première roue (322), correspondant à la position du premier trou débouchant du premier perçage taraudage à 45° (314) un troisième alésage (324) par montage en ajustement serrant par dilatation ou par cannelures, pourra recevoir le cas échéant un arbre pour entrainer un appareil, un deuxième vé circulaire (325) sur le diamètre extérieur de la première roue (322) est usiné suivant la même position et alignement que le premier vé circulaire (320), au moins une première rainure (326) de part et d'autre du premier vé circulaire (325) recevra au moins un premier segment et au moins une deuxième rainure (327), de part et d'autre des premières rainures (326), recevra au moins un premier joint d'étanchéité, on pourra ne pas réaliser les premières rainures (326) et les deuxièmes rainures (327), ce qui modifiera pas le fonctionnement, le diamètre extérieur de la première roue (322) est ajusté aux microns dans le premier alésage (321), cette dernière est montée dans le premier corps (312) et sous l'effet de la pression et du débit dans le premier corps (312) par les deuxièmes perçages taraudages (315) permettra de maintenir centrée la première roue (322) dans le premier corps (312). Le premier chapeau (328) est fixé sur le premier corps (312) par l'intermédiaire des premiers perçages (345), un deuxième bossage (329) permettra de réaliser un quatrième perçage taraudage (331) à 45° vers l'intérieur du premier corps (312), un troisième bossage (330) permettra de réaliser un cinquième perçage taraudage (332) à 90° qui débouche suivant la circonférence du quatrième alésage (334), le cinquième alésage (337) recevra en son fond un joint d'étanchéité et viendra centrer et monter le premier chapeau (328) sur le premier corps (312), une troisième rainure circulaire (338) et une quatrième rainure circulaire (340) recevront un joint d'étanchéité et au moins trois cinquièmes rainures circulaire (336) réalisées et usinées dans le sixième alésage (333) recevront au moins un joint d'étanchéité et au moins un segment, pour assurer l'étanchéité entre le premier arbre du premier alternateur (344) et le sixième alésage (333), au moins quatre sixièmes perçages taraudages (339) et les premiers perçages (545) permettront de fixer le premier alternateur (344) sur le premier chapeau (328), une deuxième roue (341) sera logée dans le quatrième alésage (334) et montée sur le premier arbre du premier alternateur (344) par l'intermédiaire du septième alésage (343) avec un ajustement serrant par dilatation ou par cannelures et un arrêt en translation, sur cette deuxième roue (341) des sixièmes rainures (342) sont usinées et non débouchant sur le diamètre extérieur de la deuxième roue (341) suivant l'axe du septième alésage (343) de la deuxième roue (341), la deuxième roue (341) sous l'action d'un fluide en pression et débit arrivant par le cinquième perçage taraudage (332) permettra de faire tourner la deuxième roue (341) qui entrainera le premier alternateur (344), la première roue (322) sous l'action d'un fluide en pression et débit agissant et arrivant par le quatrième perçage taraudage (331) à 45° vers l'intérieur du premier corps (312) et le premier perçage taraudage (314) à 45° vers l'intérieur du premier corps (312) dirigés vers les premiers pied de centrage creux (323) montés suivant des perçages positionnés circulaires en ajustement serrant par dilation dans la première roue (322), ce qui a pour effet d'entrainer en rotation la première roue (322) en rotation, qui provoque alors une inertie et une force tangentielle provoquant une force de poussée et de déplacement importante dans le sens voulue, définie par la position du premier perçage taraudage (314) et du quatrième perçage taraudage (331), il est bien entendu que toutes les pièces et appareils composant ce premier ensemble pour permettre le fonctionnement du drone seront miniaturisés au maximum, pour obtenir un poids le plus léger possible.

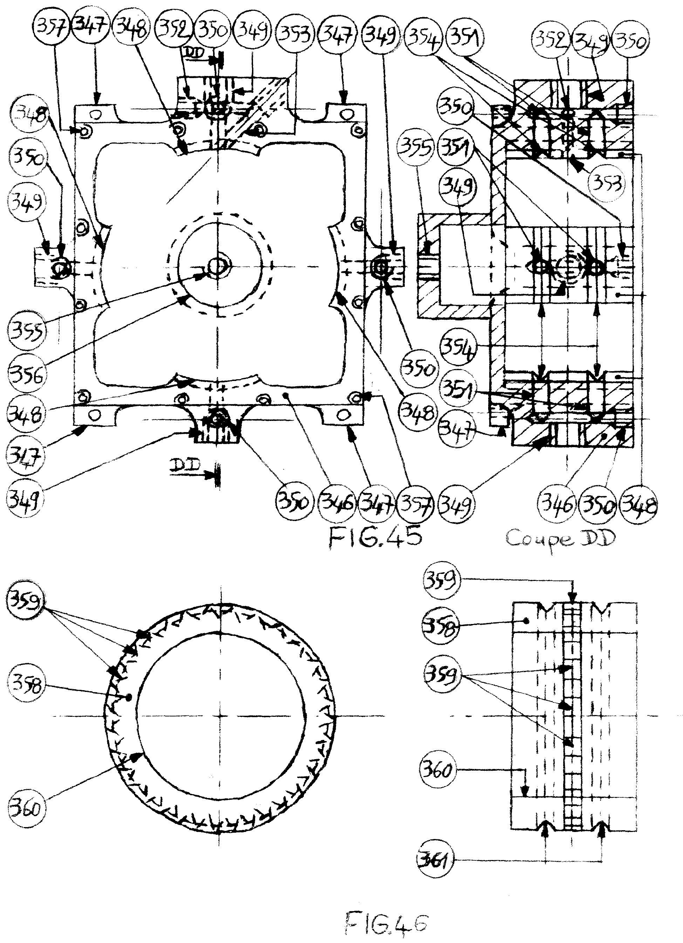

Selon le deuxième mode particulier d'une technologie devant s'inscrire dans le contexte de l'invention comprenant au moins un deuxième drone (Fig45 à 48) composé au moins d'un deuxième corps (346) moulé et coulé brut de fonderie dont la matière est la plus légère possible tout en ayant la plus grande résistance mécanique, un huitième perçage taraudage (353) à 45° vers l'intérieur du deuxième corps (346) débouche dans le huitième alésage (348), le neuvième perçages taraudage (352) sur le deuxième corps (346) débouche dans le dixième perçage taraudage(353) et communique aussi avec le onzième perçage taraudage (349) qui recevra un raccord et une tuyauterie pour acheminer le fluide en pression et débit, tous les douzièmes perçage taraudage (350) communiquent avec tous les onzièmes perçage taraudage (349) qui recevront tous un raccord et une tuyauterie pour acheminer le fluide en pression et débit et débouchent et communiquent avec tous les deuxièmes perçages (351) qui sont obtenus réalisés par perçage ou brut de fonderie lors du moulage et de la coulée du deuxième corps (346) tous ces deuxièmes perçages (351) débouchent dans tous les troisièmes vés circulaire (354) usinés et réalisés dans le huitième alésage (348), le dixième perçage taraudage (353), le neuvième perçage taraudage (352) et tous les douzièmes perçages taraudage (350), seront bouchés par une vis pointeau, le treizième perçage taraudage (355) correspond à l'aspiration de la pompe hydraulique en position basse, définissant le volume du fluide défini par le neuvième alésage (356), des deuxièmes pattes de fixation (347), permettront de fixer le deuxième corps (346) sur tous les supports, des quatorzièmes perçages taraudage (357), permettront de fixer la deuxième plaque de fermeture (362), par l'intermédiaire des troisièmes perçages (368) sur le deuxième corps (346), une troisième roue (358) en forme de couronne, dont la matière est la plus légère possible tout en ayant la plus grande résistance mécanique, la position des premières rainures en vé de 90° (359) sont usinées et réalisées sur le diamètre extérieur de la troisième roue (358) suivant l'axe centrale de cette dernière, de manière à être alignée et correspondre à la position du dixième perçage taraudage à 45° (353) le fluide en pression et débit sortant de ce dernier agira sur les troisièmes rainures en vé de 90° (359) pour entrainer en rotation la troisième roue (358), ces premières rainures en vé de 90° (359) pourront être remplacé par des perçages usinés et réalisés à 90° ou à 45° suivant l'axe central de la troisième roue (358) ou tout autre moyen, un dixième alésage (360) par montage en ajustement serrant par dilatation ou par cannelures, pourra recevoir le cas échéant un arbre pour entrainer un appareil, des troisièmes vés circulaire (361) sur le diamètre extérieur de la troisième roue (358) avec au moins un troisième vé circulaire (361) de part et d'autre des premières rainures en vé de 90° (359) sont usinés suivant la même position et alignement que les quatrièmes vés circulaire (354) positionnés sur le huitième alésage (348), le diamètre extérieur de la troisième roue (358) est ajusté aux microns dans le huitième alésage (348), cette troisième roue (358) est montée dans le deuxième corps (346) et sous l'effet de la pression et du débit dans le deuxième corps (346) par tous les deuxièmes perçages (351) permettra de maintenir centrée la troisième roue (358) dans le deuxième corps (346). Le deuxième chapeau (362) est fixé sur le deuxième corps (346) par l'intermédiaire des troisièmes perçages (368) et des quatorzièmes perçages taraudage (357), un quatrième bossage (366) permettra de réaliser un quinzième perçage taraudage (367) à 90° vers l'intérieur du deuxième corps (346) et qui débouchera suivant la circonférence du onzième alésage (365), une sixième rainure circulaire (372) recevra un joint d'étanchéité et au moins une septième rainures circulaire '(369) et au moins une huitième rainure circulaire (370) réalisées et usinées dans le douzième alésage (364) recevront au moins un joint d'étanchéité et au moins un segment, pour assurer l'étanchéité entre un deuxième arbre d'un deuxième alternateur et le douzième alésage (364), au moins quatre seizièmes perçages taraudages (371) permettront de fixer le deuxième alternateur sur le deuxième chapeau (362), une deuxième roue (341) sera logée dans le onzième alésage (365) et montée sur le deuxième arbre du deuxième alternateur par l'intermédiaire du septième alésage (343) avec un ajustement serrant par dilatation ou par cannelures et un arrêt en translation, sur cette deuxième roue (341) des sixièmes rainures (342) sont usinées et non débouchant sur le diamètre extérieur de la deuxième roue (341) suivant l'axe du septième alésage (343) de la deuxième roue (341), la deuxième roue (341) sous l'action d'un fluide en pression et débit arrivant par le quinzième perçage taraudage (367) permettra de faire tourner la deuxième roue (341) qui entrainera le deuxième alternateur, la troisième roue (358) sous l'action du fluide en pression et débit agissant et arrivant par le dixième perçage taraudage (353) à 45° vers l'intérieur du deuxième corps (346) dirigés vers les premières rainures en vé de 90° (359) réalisées et usinées dans la troisième roue (359), ce qui a pour effet d'entrainer en rotation la troisième roue (358) en rotation, qui provoque alors une inertie et une force tangentielle provoquant une force de poussée et de déplacement importante dans le sens voulue, définie par la position du dixième perçage taraudage (353), il est bien entendu que toutes les pièces et appareils composant ce premier ensemble pour permettre le fonctionnement du drone seront miniaturisés au maximum, pour obtenir un poids le plus léger possible. Le deuxième chapeau de fermeture (362) viendra se fixer sur le deuxième corps (346) et qui est équipé d'un deuxième alternateur fixé par l'intermédiaire des septièmes perçages taraudage (371) avec une quatrième roue identique à la deuxième roue (341) et qui sera aussi entrainés en rotation par un fluide en pression et débit. On pourra adopter le même principe et conception que le premier chapeau de fermeture (328) avec le premier alternateur (344) et la deuxième roue (341), sans le deuxième bossage (329) et le quatrième perçage taraudage (331) mais la plaque de fermeture aura la même forme carrée que le deuxième chapeau de fermeture (362).

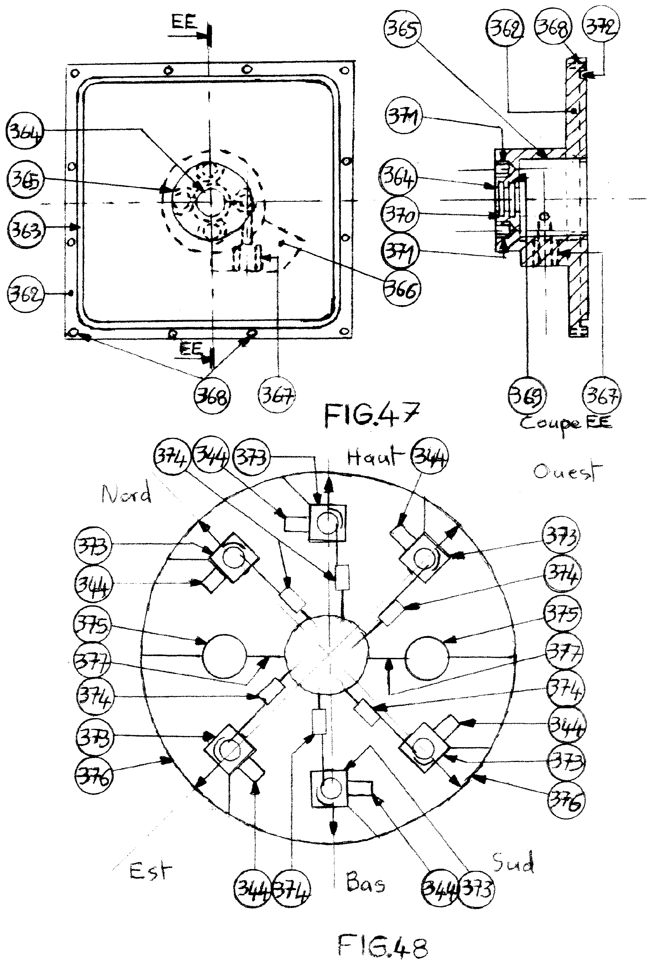

Selon le premier mode particulier d'une technologie devant s'inscrire dans le contexte de l'invention comprenant au moins un premier drone (Fig41 à 44) et au moins un deuxième drone (Fig45 à 48), la (Fig48) représente la schématique de fonctionnement d'un ensemble de drones pouvant resté en position stationnaire ou se déplacer vers le Nord ou le Sud, vers l'Est ou l'Ouest et vers le haut ou le bas, définissant à la (Fig48) un support réceptionnant dans l'axe Nord et Sud deux drones (373) en opposition d'inertie, équipés chacun d'un alternateur (344) et d'un réducteur de pression (374) qui sera réglé à une pression définie équivalente, mais qui seront opposées développant une inertie tangentielle qui se transforme en déplacement directionnel opposé, maintenant la position Nord Sud en stationnaire des deux drones, il suffit donc de faire varier la pression et le débit sur l'un des réducteurs de pression (374) du drone Nord ou Sud pour définir la direction du déplacement vers le Nord ou vers le Sud, des bobines PWR, qui permettront de faire varier la pression et le débit, en fonction de la tension électrique envoyée sur les bobines PWR des réducteurs de pression (374) de chaque drone (373) Nord ou Sud, définissant le sens du déplacement, au moins deux pompes hydraulique (375) assureront en alternance la mise en pression des circuits en continue et en circuit fermé, les autres ensembles de drones Ouest-Est et Haut-Bas fonctionneront de la même manière et suivant le même concept pour définir le sens et la direction du déplacement, une caméra et un automate permettront de définir la gestion des mouvements et actions voulues en fonction des obstacles, pour définir la direction et les différentes actions à entreprendre sur ces ensembles de drones pour se déplacer à droite ou à gauche, en avant ou en arrière et du haut ou vers le bas. Cette technologie de fonctionnement d'un ensemble de drones peut conjuguer deux énergies l'une sous l'effet d'un fluide en pression et débit et l'autre sous l'effet des aimants permanents.

Les dessins annexés illustrent l'invention :
Les Figures 01 à 15 représentent suivant une première caractéristique un premier ensemble comprenant au moins un moteur hybride avec au moins deux pistons hybride, conjuguant au moins deux énergies, propulsés par un fluide en pression et débit, dont chaque piston est assemblé et monté dans au moins une bague positionnée au moins entre deux chemises ou au moins incorporé dans l'usinage de l'une des deux chemises, avec au moins un chapeau de fermeture, avec au moins un premier piston en point mort haut (21) dans la première chemise point mort haut (11) qui sera propulsé vers le point mort bas dans la première chemise point mort bas (01), entrainant le deuxième piston en point mort bas composé du pied de piston (82) vissé dans la tête du piston (83) qui se retrouve donc en fin d'action de propulsion du premier piston en point mort haut (21), en position point mort bas dans la deuxième chemise en point mort bas (61) pour être à son tour propulsé vers le point mort haut dans la deuxième chemise point mort haut (74) et ainsi de suite
Les Figures 16 à 30 représentent un deuxième ensemble dont selon le mode particulier du premier ensemble ci-dessus défini et un autre mode particulier d'un deuxième ensemble défini ci dessous comprenant au moins un moteur hybride avec au moins deux pistons hybride, conjuguant au moins deux énergies, propulsés par un fluide en pression et débit, dont chaque piston est assemblé et monté dans au moins une bague positionnée au moins entre deux chemises avec au moins un chapeau de fermeture et au moins une première demi-cames de détection circulaire de 240° (260) et une deuxième demi-cames de détection circulaire de 240° (265) fixées sur le volant du moteur hybride (Fig31 et Fig32) dotées chacune d'au moins une première piste de détection (261) et une deuxième piste de détection (266), qui permettent une action direct ou indirect par l'intermédiaire d'au moins un galet sur au moins un premier appareil hydraulique à commande mécanique (Fig37) par piste de détection.
Les Figures 31 et 32 représentent un système de détection avec au moins une première demi-cames de détection circulaire de 240° (260) et une deuxième demi-cames de détection circulaire de 240° (265) fixées sur le volant du moteur hybride (Fig31 et Fig32) dotées chacune d'au moins une première piste de détection (261) et une deuxième piste de détection (266), qui permettent une action direct ou indirect par l'intermédiaire d'au moins un galet sur au moins un premier appareil hydraulique à commande mécanique (Fig37) par piste de détection ou par au moins un premier appareil à commande électro mécanique par piste de détection pour alimenter au moins la bobine d'un premier appareil hydraulique pour acheminer le fluide en pression et débit Les Figures 33 et 34 représentent un mode de pistons qui font apparaître des autres formes réalisées et usinées suivant les premières formes conçues en escalier avec des marches et contre marches (270) ou les deuxièmes formes avec des vagues creuses et contre marches (271) sur le premier piston en point mort haut (21) et suivant les troisièmes formes conçues en escalier avec des marches et contre marches (272) ou les quatrièmes formes avec des vagues creuses et contre marches (273) sur le deuxième piston en point mort bas composé du pied de piston (82) vissé dans la tête du piston (83).
Les Figures 35 et 36 représentent au moins un premier échangeur thermique composé d'au moins trois parties (Fig35 et Fig36) et au moins un deuxième échangeur thermique composé d'au moins quatre parties permettant de refroidir au moins un groupe hydraulique et de produire du chauffage, dont la particularité est d'être conçu de manière que les formes intérieures des deux parties intérieurs de l'échangeur thermique seront usinées ou moulées et coulées brut de fonderie pour épouser au moins la forme du corps extérieur d'au moins une pompe hydraulique de tous types, pour permettre la fixation de l'échangeur thermique sur le corps extérieur de cette dernière, mais cette pompe hydraulique peut être conçue aussi avec un double corps moulé et coulé brute de fonderie, avec un premier corps ou circule un fluide en pression et débit et dans le deuxième corps extérieur ou circule un deuxième fluide pour produire du chauffage.
Les Figures 37 à 40 représentent au moins un premier appareil hydraulique dont le premier et deuxième ensemble sont chacun équipé avec au moins deux appareils hydraulique identique par ensemble, dont la particularité pour le premier ou deuxième appareil hydraulique est de permettre la mise en pression et débit d'un circuit par l'alignement et l'intermédiaire du premier perçage taraudé (299) du premier corps (294), du premier perçage (309) du premier axe (305) et du deuxième perçage taraudage (302) du premier corps (294), quand le premier axe (305) est actionné par un système mécanique à galet (306) ou autre ou par un appareil à bobine électro magnétique ouvrant le circuit et quand le premier axe (305) n'est plus actionné et revient en position repos par l'intermédiaire d'un pilotage interne communiquant par le premier perçage taraudage (299), le troisième perçage taraudé (300) et le quatrième perçage taraudé (301) pour repousser le premier axe (305), dont la particularité est de permettre la dépressurisation du circuit en liaison avec le deuxième perçage taraudé (302) qui communique alors par l'intermédiaire de la premier rainure (310) du premier axe (305) avec le cinquième perçage taraudage (303) qui met en dépressurisation le circuit par l'intermédiaire d'un filtre retour directement dans le réservoir hydraulique.
Les Figures 41 à 44 représentent un premier ensemble permettant la conception et le fonctionnement d'un premier mode de drone comprenant au moins un premier corps (312) dont la matière est la plus légère possible tout en ayant la plus grande résistance mécanique, avec une première roue (322) à l'intérieure de ce premier corps et qui est centrée et entrainée en rotation par un fluide en pression et débit dans le premier alésage (321), un premier chapeau de fermeture (328) viendra se fixer sur le premier corps (312) et qui est équipé d'un premier alternateur (344) avec une deuxième roue (341) entrainés en rotation par un fluide en pression et débit.
Les Figures 45 à 48 représentent un deuxième ensemble permettant la conception et le fonctionnement d'un deuxième mode de drone comprenant au moins un troisiéme corps (346) dont la matière est la plus légère possible tout en ayant la plus grande résistance mécanique, avec une troisiéme roue (358) à l'intérieure de ce troisiéme corps et qui est centrée et entrainée par un fluide en pression et débit dans le huitième alésage (348), un deuxième chapeau de fermeture (362) viendra se fixer sur le deuxième corps (346) et qui est équipé d'un deuxième alternateur fixé par l'intermédiaire des septièmes perçages taraudage (371) avec une quatrième roue identique à la deuxième roue (341) et qui sera aussi entrainés en rotation par un fluide en pression et débit. On pourra adopter le même principe et conception que le premier chapeau de fermeture (328) avec le premier alternateur (344) et la deuxième roue (341), sans le deuxième bossage (329) et le quatrième perçage taraudage (331) mais la plaque de fermeture aura la même forme carré que le deuxième chapeau de fermeture (362).

Les dispositifs selon l'invention sont particulièrement destiné au moteur hybride avec au moins deux pistons hybride, conjuguant au moins deux énergies, propulsés par un fluide en pression et débit, dont chaque piston est assemblé et monté dans au moins une bague positionnée au moins entre deux chemises ou incorporé dans l'usinage d'au moins une des deux chemises avec au moins un chapeau de fermeture, (Fig01 à 30). Il est constitué par au moins deux demi-cames de détection circulaire de 240° fixées sur le volant du moteur hybride (Fig31 et Fig32), par au moins deux appareils hydraulique (Fig37 à 40) à commande mécanique ou par des appareils électro mécanique et dont au moins un échangeur thermique composé d'au moins trois parties (Fig35 et Fig36) permet de refroidir au moins un groupe hydraulique et de produire du chauffage, dont la particularité est d'être conçu de manière que les formes intérieures des deux parties intérieurs de l'échangeur thermique seront usinées ou moulées et coulées brut de fonderie pour épouser au moins la forme du corps extérieur d'au moins une pompe hydraulique de tous types, pour permettre la fixation de l'échangeur thermique sur le corps extérieur de cette dernière, mais cette pompe hydraulique peut être conçue aussi avec un double corps moulé et coulé brute de fonderie, avec un premier corps ou circule un fluide en pression et débit et dans le deuxième corps extérieur ou circule un deuxième fluide pour produire du chauffage. Par expérience j'ai pu agir sur la cage extérieur d'un roulement avec de l'air comprimé, ce dernier s'est propulsé dans les airs sans pouvoir le retrouver, j'ai pu aussi expérimenter le même phénomène en reliant ces deux roulements par un cordon, ils se sont aussi propulsés dans les airs, avec un mouvement en rotation, d'où l'expérimentation d'un ensemble de drones pour transformer un mouvement rotatif d'inertie tangentielle en un déplacement axial.

## Revendications

1. Ensemble comprenant:
- Au moins un moteur hybride avec au moins deux pistons hybride, conjuguant au moins deux énergies, propulsés par un fluide en pression et débit, dont chaque piston est assemble et monté dans au moins une bague positionnée au moins entre deux chemises ou incorporé dans l'usinage et la conception d'au moins une des chemises (Fig01 à 30) avec au moins un chapeau de fermeture
- et au moins deux demi-cames de détection circulaire de 240° fixées sur le volant du moteur hybride (Fig31 et Fig32) dotées chacune d'au moins une piste de détection, qui permet une action direct ou indirect par l'intermédiaire d'au moins un galet sur au moins un appareil hydraulique (Fig37 à 40) à commande mécanique par piste de détection ou par au moins un appareil à commande électro mécanique par piste de détection pour alimenter au moins la bobine d'un appareil hydraulique pour acheminer le fluide en pression et débit vers au moins une chambre de détente et propulsion d'au moins un piston en point mort haut et/ou en point mort bas, assemblé et monté dans au moins une bague positionnée au moins entre deux chemises avec au moins un chapeau de fermeture et dont au moins un des deux pistons doit obligatoirement être en dépressurisation, alors que l'autre est en pression
- et dont au moins un échangeur thermique composé d'au moins trois parties (Fig14 à Fig16) permet de refroidir au moins un groupe hydraulique et de produire du chauffage, dont la particularité est d'être conçu de manière que les formes intérieures des deux parties intérieurs de l'échangeur thermique seront usinées ou moulées et coulées brut de fonderie pour épouser au moins la forme du corps extérieur d'au moins une pompe hydraulique de tous types, pour permettre la fixation de l'échangeur thermique sur le corps extérieur de cette dernière
- et dont au moins un dispositif composé de six drones (Fig41 à 47) pouvant être en stationnaire ou pouvant se déplacer suivant les six axes, du Nord au Sud, de l'Est à l'Ouest et du haut vers le bas ou inversement, technologie qui sera utilisé aussi dans tous les domaines des transports pour déplacer un vélo, une moto, un véhicule etc...., mais aussi entraîner n'importe quel système mécanique ou autre, les pièces et appareils composants ces drones seront miniaturisés au maximum, avec les matières les plus légères possible, un dixième alésage (360) et un troisième alésage (324) par montage ajustement serrant par dilatation ou par cannelures, pourront recevoir un arbre pour entrainer un appareil.

2. Dispositif selon la revendication 1 **caractérisé en ce que**:
- Au moins un premier piston en point mort haut (21) et le deuxième piston en point mort bas composé du pied de piston (82) vissé dans la tête du piston (83), ayant tous deux une tête de piston et un pied de piston, dont la particularité du diamètre du pied de piston devra toujours être supérieur au diamètre de la tête du premier piston en point mort haut (21), pour former avec le deuxième alésage (02), le troisième alésage cylindrique ou légèrement conique (16) ayant la même pente que la première surface conique (15), au moins une première chambre de détente et propulsion (32), dont la forme définit le plus petit volume par au moins une première chemise point mort bas (01) et au moins le troisième alésage cylindrique ou légèrement conique (16) avec un diamètre intérieur ayant au moins un premier diamètre et surface de même cylindricité ou conicité (113) du premier piston en point mort haut (21) dans la première chemise point mort haut (11), le troisième alésage cylindrique ou légèrement conique (16) dans la première chemise point mort haut (11) et le premier diamètre et surface de même cylindricité ou conicité (113) du premier piston en point mort haut (21) sont positionnés entre la première chemise point mort bas (01) suivant le premier chanfrein qui recevra un joint d'étanchéité est emboîtée dans la deuxième chemise point mort (11) et assure l'étanchéité avec au moins une deuxième chambre de détente et propulsion (33), la première bague (31) du premier piston en point mort haut (11) est conçue et usinée comme un cylindre, pour être montée avec un ajustement serrant à l'azote indémontable pour venir bloquer au moins une deuxième bague (30) et au moins un premier empilage de bagues conçu avec une troisième bague (29), une quatrième bague (28), une cinquième bague (27) et une sixième bague (26), ce premier empilage de bague peut être remplacé par une bague unique comme (85) et avec au moins un deuxième empilage de bagues conçu avec une septième bague (25), une huitième bague (24), une neuvième bague (23) et une dixième bague (22), dont ce deuxième empilage de bagues peut être aussi remplacé par la douzième bague unique (85) l'ensemble de ces bagues étant montées dans le quatrième alésage (117) du premier piston en point mort haut (21) et formant au moins une troisième chambre de détente et propulsion (37), une quatrième chambre de détente et propulsion (36), une cinquième chambre de détente et propulsion (35) et une sixième chambre de détente et propulsion (34) qui communique par un premier perçage (59), un deuxième perçage (48), un troisième perçage (38) et un quatrième perçage (47) avec la deuxième chambre de détente et propulsion (33) et dans la première chambre de détente et propulsion (32), après la propulsion vers le point mort bas du premier piston en point mort haut (21), pour y acheminent un fluide en pression et débit.

3. Dispositif selon les revendications 1 et 2 **caractérisé en ce que**:
- Au moins un deuxième piston en point mort bas composé du pied de piston (82) vissé dans la tête du piston (83), dont sa particularité est d'être conçue en deux parties, doté d'un pied de piston qui est vissé dans la tête de ce dernier et bloqué en rotation et qui sera propulsé vers le point mort haut dans la deuxième chemise point mort haut (74), entrainant à son tour avec lui le premier piston en point mort haut (21), qui se retrouve donc en fin d'action de propulsion du deuxième piston en point mort bas composé du pied de piston (82) vissé dans la tête du piston (83), en position point mort haut dans la première chemise point mort haut (11) pour être à son tour propulsé vers le point mort bas dans la première chemise point mort bas (01) et ainsi de suite de la même manière, dont le diamètre de la tête du deuxième piston en point mort bas (83) correspond au quatrième alésage (77) de la deuxième chemise point mort haut (74) et le diamètre du pied de piston (82) correspond à l'alésage de la deuxième chemise point mort bas (61), dont le diamètre du pied de piston (82) du deuxième piston en point mort bas devra toujours être inférieur au diamètre de la tête de piston (83) du deuxième piston en point mort bas, pour former avec le cinquième alésage (77), le sixième alésage cylindrique ou légèrement conique (72) ayant la même pente que la deuxième surface conique (71), au moins une sixième chambre de détente et propulsion (87), dont la forme définit le plus petit volume par au moins une deuxième chemise point mort haut (74) et au moins le sixième alésage cylindrique ou légèrement conique (72) avec un diamètre intérieur ayant au moins un deuxième diamètre et surface de même cylindricité ou conicité (138) du deuxième piston en point mort bas composé du pied de piston (82) vissé dans la tête du piston (83), dans la deuxième chemise point mort bas (61), le sixième alésage cylindrique ou légèrement conique (72) dans la deuxième chemise point mort bas (61) et le deuxième diamètre et surface de même cylindricité ou conicité (138) du deuxième piston en point mort bas composé du pied de piston (82) vissé dans la tête de piston (83) sont positionnés entre la deuxième chemise point mort haut (74) suivant le deuxième chanfrein (78) qui recevra un joint d'étanchéité est emboîtée dans la deuxième chemise point mort bas (61) et assure l'étanchéité avec au moins une septième chambre de détente et propulsion (88).

4. Dispositif selon les revendications 1 à 3 **caractérisé en ce que**:
- Dont la particularité du premier perçage taraudé (60) et du deuxième perçage taraudé (101) sont de permettre de purger et chasser l'air dans toutes les chambres de détente et propulsion avant fonctionnement, on bouchera ces perçages taraudages par des vis pointeaux sans tête. La troisième surface conique (58), la quatrième surface conique (115), la cinquième surface conique (100) et la sixième surface conique (135) permettent d'augmenter la force de poussée sur ces surfaces coniques par l'action du fluide en pression et débit. Des saignées circulaires à 45° à fond arrondi en forme d'escalier sont réalisées et usinées sur le premier piston en point mort haut (21) et sur le deuxième piston en point mort bas composé du pied de piston (82) vissé dans la tête du piston (83), suivant les premières saignées circulaires à 45° à fond arrondi en forme d'escalier (112), les deuxièmes saignées circulaires à 45° à fond arrondi en forme d'escalier (114), les troisièmes saignées circulaires à 45° à fond arrondi en forme d'escalier (137) et les quatrièmes saignées circulaires à 45° à fond arrondi en forme d'escalier (139) la aussi dans le but d'augmenter la force de poussée sur ces surfaces par l'action du fluide en pression et débit. Au moins une douzième bague (85) et au moins une treizième bague (84) auront aussi des saignées circulaires à 45° à fond arrondi en forme d'escalier qui sont réalisées et usinées à l'intérieur de la douzième bague (85) et la treizième bague (84) suivant les cinquièmes saignées circulaires à 45° à fond arrondi en forme d'escalier (95) et les sixièmes saignées circulaires à 45° à fond arrondi en forme d'escalier (99), les autres saignées circulaires à 45° à fond arrondi en forme d'escalier seront aussi réalisées et usinées de la même manière suivant les Fig.05 et 06, la (Fig33) et la (Fig34) font apparaître des autres formes réalisées et usinées suivant les premières formes conçues en escalier avec des marches et contre marches (270) ou les deuxièmes formes avec des vagues creuses et contre marches (271) sur le premier piston en point mort haut (21) et suivant les troisièmes formes conçues en escalier avec des marches et contre marches (272) ou les quatrièmes formes avec des vagues creuses et contre marches (273) sur le deuxième piston en point mort bas composé du pied de piston (82) vissé dans la tête du piston (83),
- dont la particularité du quatrième diamètre intérieur avec une surface conique usinée (192 et du troisième diamètre extérieur de la surface conique usinée (187) sont réalisées et usinées de manière que le volume des chambres de détente et propulsion dans le premier et deuxième ensemble chemises, pistons, bagues et chapeaux, devront être le plus petit possible pour permettre une mise en pression et débit instantanée, mais aussi une dépressurisation rapide de ces trois chambres par ensemble,

5. Dispositif selon les revendications 1 à 3 **caractérisé en ce que**:
- Un système de détection avec au moins une première demi-cames de détection circulaire de 240° (260) et une deuxième demi-cames de détection circulaire de 240° (265) fixées sur le volant du moteur hybride (Fig31 et Fig32) dotées chacune d'au moins une première piste de détection (261) et une deuxième piste de détection (266), qui permettent une action direct ou indirect par l'intermédiaire d'au moins un galet sur au moins un premier appareil hydraulique à commande mécanique (Fig37) par piste de détection ou par au moins un premier appareil à commande électro mécanique par piste de détection pour alimenter au moins la bobine d'un premier appareil hydraulique pour acheminer le fluide en pression et débit. Les Figures 33 et 34 représentent un mode de pistons qui font apparaître des autres formes réalisées et usinées suivant les premières formes conçues en escalier avec des marches et contre marches (270) ou les deuxièmes formes avec des vagues creuses et contre marches (271) sur le premier piston en point mort haut (21) et suivant les troisièmes formes conçues en escalier avec des marches et contre marches (272) ou les quatrièmes formes avec des vagues creuses et contre marches (273) sur le deuxième piston en point mort bas composé du pied de piston (82) vissé dans la tête du piston (83), au moins un premier appareil hydraulique dont le premier et deuxième ensemble sont chacun équipé avec au moins deux appareils hydraulique identique par ensemble, dont la particularité pour le premier ou deuxième appareil hydraulique est de permettre la mise en pression et débit d'un circuit par l'alignement et l'intermédiaire du premier perçage taraudé (299) du premier corps (294), du premier perçage (309) du premier axe (305) et du deuxième perçage taraudage (302) du premier corps (294), quand le premier axe (305) est actionné par un système mécanique à galet (306) ou autre ou par un appareil à bobine électro magnétique ouvrant le circuit et quand le premier axe (305) n'est plus actionné et revient en position repos par l'intermédiaire d'un pilotage interne communiquant par le premier perçage taraudage (299), le troisième perçage taraudé (300) et le quatrième perçage taraudé (301) pour repousser le premier axe (305), dont la particularité est de permettre la dépressurisation du circuit en liaison avec le deuxième perçage taraudé (302) qui communique alors par l'intermédiaire de la premier rainure (310) du premier axe (305) avec le cinquième perçage taraudage (303) qui met en dépressurisation le circuit par l'intermédiaire d'un filtre retour directement dans le réservoir hydraulique.

6. Dispositif selon les revendications 1 à 4, **caractérisé en ce que**:
- Le premier et deuxième échangeur thermique (Fig35 à Fig36) est composé d'au moins trois parties, une première partie (274), une deuxième partie (285) et une troisième partie (280), dont la particularité de la première partie (274) est d'être un corps extérieure en forme de couronne usinée et montée avec un ajustement serrant à l'azote indémontable sur la deuxième partie (285), pour assurer une étanchéité totale après montage, cette première partie (274) est dotée d'un premier perçage taraudé d'entrée (275) qui recevra un raccord et une tuyauterie, d'où viendra le fluide, cette première partie aura plusieurs premières ailettes usinées (276), qui seront ajustés avec du jeu dans la première cloison (278) de circulation du fluide de la deuxième partie (285), ces premières ailettes (276) seront percées par une multitude de premiers perçages (277), ces premières ailettes usinées (276) et premiers perçages (277) permettront la circulation du fluide par le premier perçages taraudé d'entrée (275) vers le deuxième perçage taraudé de sortie (279), la deuxième partie (285) est dotée d'une première rainure circulaire (282) communiquant dans la première cloison (278), pour augmenter le volume en circulation du fluide, une troisième partie (280) est usinée en ajustement glissant juste dans le premier alésage (287) de la deuxième partie (285), pour permettre l'assemblage de la première, de la deuxième et de la troisième partie constituant l'échangeur thermique sur le corps extérieur de la pompe hydraulique qui est de forme conique, par l'intermédiaire de tirants, tiges filetées ou vis suivant les deuxièmes perçages usinés (284) dans la deuxième et troisième partie, la première forme conique (286) de la deuxième partie (285) et la deuxième forme conique (283) de la troisième partie (280) sont ajustées avec serrage et épouse la double paroi conique de la pompe hydraulique, les trois parties constituant cet échangeur thermique est en matière aluminium ou autre, pour permettre un échange rapide et performant de la chaleur thermique de la pompe hydraulique vers l'échangeur thermique, dont le fluide en circulation va capter l'énergie thermique et la faire circuler.

7. Dispositif selon la revendication 6, **caractérisé en ce que**:
- L'on peut ajouter une quatrième partie supplémentaire (288), pour augmenter la capacité thermique et le rendement calorifique de ce deuxième échangeur thermique, dont la particularité de la quatrième partie supplémentaire (288) est d'être usinée et montée avec un ajustement serrant à l'azote indémontable sur la première partie (274), pour assurer une étanchéité totale après montage, cette quatrième partie supplémentaire est dotée d'un troisième perçage taraudé d'entrée (289) qui recevra un raccord et une tuyauterie d'où viendra le fluide, cette quatrième partie supplémentaire (288) aura plusieurs deuxièmes ailettes (290) usinées qui seront ajustées avec du jeu dans la deuxième cloison (292) de circulation du fluide, ces deuxièmes ailettes (290) seront percées par une multitude de troisièmes perçages (291), ces deuxièmes ailettes (290) et ces troisièmes perçages (291) permettront la circulation du fluide par le troisième perçage taraudé d'entrée (289) vers le quatrième perçage taraudé de sortie (293) qui recevra un raccord et une tuyauterie, d'où sortira le fluide, une deuxième rainure supplémentaire sur la troisième partie (280) pourra être réalisée et usinée de la même manière que la rainure circulaire (282) sur la troisième partie (280) pour augmenter le volume du fluide circulant dans la cloison (292).

8. Dispositif selon l'une quelconque des revendications 1 à 7, **caractérisé en ce que**:
- Au moins un premier drone (Fig41 à 44) comprenant au moins un premier corps (312) dont la matière est la plus légère possible tout en ayant la plus grande résistance mécanique, un premier bossage (313) permettra de réaliser un premier perçage taraudage (314) à 45°, les deuxièmes perçages taraudage (315) à 90° débouchent à l'intérieur du premier corps (312) et communique dans un premier vé circulaire (320) usiné sur le premier alésage (321), le troisième perçage taraudage (318) correspond à l'aspiration de la pompe hydraulique en position basse, définissant le volume par le deuxième alésage (319), les quatrièmes perçages taraudage (316), permettront de fixer la première plaque de fermeture (328), une première roue (322), des premiers pied de centrage creux (323) montés suivant des perçages positionnés circulaires en ajustement serrant par dilation dans la première roue (322), correspondant à la position du premier trou débouchant du premier perçage taraudage à 45° (314) un troisième alésage (324), un deuxième vé circulaire (325) est usiné suivant la même position et alignement que le premier vé circulaire (320), au moins une première rainure (326) de part et d'autre du premier vé circulaire (325) recevra au moins un premier segment et au moins une deuxième rainure (327), de part et d'autre des premières rainures (326), recevra au moins un premier joint d'étanchéité, on pourra ne pas réaliser les premières rainures (326) et les deuxièmes rainures (327), le diamètre extérieur de la première roue (322) est ajusté aux microns dans le premier alésage (321), cette dernière est montée dans le premier corps (312) et sous l'effet de la pression et du débit dans le premier corps (312) par les deuxièmes perçages taraudages (315) permettra de maintenir centrée la première roue (322). Le premier chapeau (328) est fixé sur le premier corps (312), un deuxième bossage (329) permettra de réaliser un quatrième perçage taraudage (331) à 45° vers l'intérieur du premier corps (312), un troisième bossage (330) permettra de réaliser un cinquième perçage taraudage (332) à 90° qui débouche suivant la circonférence du quatrième alésage (334), au moins trois cinquièmes rainures circulaire (336) réalisées et usinées dans le sixième alésage (333) recevront au moins un joint d'étanchéité et au moins un segment, pour assurer l'étanchéité entre le premier arbre du premier alternateur (344) et le sixième alésage (333), au moins quatre sixièmes perçages taraudages (339) et les premiers perçages (545) permettront de fixer le premier alternateur (344) sur le premier chapeau (328), une deuxième roue (341) sera logée dans le quatrième alésage (334) et montée sur le premier arbre du premier alternateur (344) par l'intermédiaire du septième alésage (343) avec un ajustement serrant par dilatation ou par cannelures et un arrêt en translation, sur cette deuxième roue (341) des sixièmes rainures (342) sont usinées et non débouchant sur le diamètre extérieur de la deuxième roue (341) suivant l'axe du septième alésage (343) de la deuxième roue (341), la deuxième roue (341) sous l'action d'un fluide en pression et débit arrivant par le cinquième perçage taraudage (332) permettra de faire tourner la deuxième roue (341) qui entrainera le premier alternateur (344), la première roue (322) sous l'action d'un fluide en pression et débit agissant et arrivant par le quatrième perçage taraudage (331) à 45° vers l'intérieur du premier corps (312) et le premier perçage taraudage (314) à 45° vers l'intérieur du premier corps (312) dirigés vers les premiers pied de centrage creux (323) montés suivant des perçages positionnés circulaires en ajustement serrant par dilation dans la première roue (322), ce qui a pour effet d'entrainer en rotation la première roue (322) en rotation, qui provoque alors une inertie et une force tangentielle provoquant une force de poussée et de déplacement importante dans le sens voulue, définie par la position du premier perçage taraudage (314) et du quatrième perçage taraudage (331),

9. Dispositif selon la revendication 8, **caractérisé en ce que**:
- Au moins un deuxième drone (Fig45 à 48) composé au moins d'un deuxième corps (346) moulé et coulé brut de fonderie, un huitième perçage taraudage (353) à 45° débouche dans le huitième alésage (348), le neuvième perçages taraudage (352) débouche dans le dixième perçage taraudage (353) et communique aussi avec le onzième perçage taraudage (349, tous les douzièmes perçages taraudage (350) communiquent avec tous les onzièmes perçages taraudage (349) qui recevront tous un raccord et une tuyauterie pour acheminer le fluide en pression et débit et débouchent et communiquent avec tous les deuxièmes perçages (351) qui sont obtenus réalisés par perçage ou brut de fonderie lors du moulage et de la coulée du deuxième corps (346) tous ces deuxièmes perçages (351) débouchent dans tous les troisièmes vés circulaire (354) usinés et réalisés dans le huitième alésage (348), le dixième perçage taraudage (353), le neuvième perçage taraudage (352) et tous les douzièmes perçages taraudage (350), seront bouchés par une vis pointeau, le treizième perçage taraudage (355) correspond à l'aspiration de la pompe hydraulique en position basse, des quatorzièmes perçages taraudage (357), permettront de fixer la deuxième plaque de fermeture (362), par l'intermédiaire des troisièmes perçages (368) sur le deuxième corps (346), une troisième roue (358) en forme de couronne, la position des premières rainures en vé de 90° (359) sont usinées et réalisées sur le diamètre extérieur de la troisième roue (358) suivant l'axe centrale de cette dernière, de manière à être alignée et correspondre à la position du dixième perçage taraudage à 45° (353) le fluide en pression et débit sortant de ce dernier agira sur les troisièmes rainures en vé de 90° (359) pour entrainer en rotation la troisième roue (358), ces premières rainures en vé de 90° (359) pourront être remplacé par des perçages usinés et réalisés à 90° ou à 45° suivant l'axe central de la troisième roue (358) ou tout autre moyen, des troisièmes vés circulaire (361) sur le diamètre extérieur de la troisième roue (358) avec au moins un troisième vé circulaire (361) de part et d'autre des premières rainures en vé de 90° (359) sont usinés suivant la même position et alignement que les quatrièmes vés circulaire (354) positionnés sur le huitième alésage (348), le diamètre extérieur de la troisième roue (358) est ajusté aux microns dans le huitième alésage (348), cette troisième roue (358) est montée dans le deuxième corps (346) et sous l'effet de la pression et du débit dans le deuxième corps (346) par tous les deuxièmes perçages (351) permettra de maintenir centrée la troisième roue (358) dans le deuxième corps (346). Le deuxième chapeau (362) est fixé sur le deuxième corps (346), un quatrième bossage (366) permettra de réaliser un quinzième perçage taraudage (367) à 90° débouche suivant la circonférence du onzième alésage (365), une sixième rainure circulaire (372) recevra un joint d'étanchéité et au moins une septième rainures circulaire (369) et au moins une huitième rainure circulaire (370) réalisées et usinées dans le douzième alésage (364) recevront au moins un joint d'étanchéité et au moins un segment, pour assurer l'étanchéité entre un deuxième arbre d'un deuxième alternateur et le douzième alésage (364), au moins quatre seizièmes perçages taraudages (371) permettront de fixer le deuxième alternateur sur le deuxième chapeau (362), une deuxième roue (341) sera logée dans le onzième alésage (365) et montée sur le deuxième arbre du deuxième alternateur par l'intermédiaire du septième alésage (343) avec un ajustement serrant par dilatation ou par cannelures et un arrêt en translation, suivant le même mode de fonctionnement et montage du premier drone (Fig41 à 44), sous l'action d'un fluide en pression et débit arrivant par le quinzième perçage taraudage (367) permettra de faire tourner la deuxième roue (341) qui entrainera le deuxième alternateur, la troisième roue (358) sous l'action du fluide en pression et débit agissant et arrivant par le dixième perçage taraudage (353) à 45° vers l'intérieur du deuxième corps (346) dirigés vers les premières rainures en vé de 90° (359) réalisées et usinées dans la troisième roue (359), ce qui a pour effet d'entrainer en rotation la troisième roue (358) en rotation, qui provoque alors une inertie et une force tangentielle provoquant une force de poussée et de déplacement importante dans le sens voulue, définie par la position du dixième perçage taraudage (353). Le deuxième chapeau de fermeture (362) viendra se fixer sur le deuxième corps (346) et qui est équipé d'un deuxième alternateur fixé par l'intermédiaire des septièmes perçages taraudage (371) avec une quatrième roue identique à la deuxième roue (341) et qui sera aussi entrainés en rotation par un fluide en pression et débit. On pourra adopter le même principe et conception que le premier chapeau de fermeture (328) avec le premier alternateur (344) et la deuxième roue (341), sans le deuxième bossage (329) et le quatrième perçage taraudage (331) mais la plaque de fermeture aura la même forme carrée que le deuxième chapeau de fermeture (362).

10. Dispositif selon les revendications 8 et 9, **caractérisé en ce que**:
- Au moins un premier drone (Fig41 à 44) et au moins un deuxième drone (Fig45 à 48), la (Fig48) représente la schématique de fonctionnement d'un ensemble de drones pouvant resté en position stationnaire ou se déplacer vers le Nord ou le Sud, vers l'Est ou l'Ouest et vers le haut ou le bas, définissant à la (Fig48) un support réceptionnant dans l'axe Nord et Sud deux drones (373) en opposition d'inertie, équipés chacun d'un alternateur (344) et d'un réducteur de pression (374) qui sera réglé à une pression définie équivalente, mais qui seront opposées développant une inertie tangentielle qui se transforme en déplacement directionnel opposé, maintenant la position Nord Sud en stationnaire des deux drones, il suffit donc de faire varier la pression et le débit sur l'un des réducteurs de pression (374) du drone Nord ou Sud pour définir la direction du déplacement vers le Nord ou vers le Sud, des bobines PWR, qui permettront de faire varier la pression et le débit, en fonction de la tension électrique envoyée sur les bobines PWR des réducteurs de pression (374) de chaque drone (373) Nord ou Sud, définissant le sens du déplacement, au moins deux pompes hydraulique (375) assureront en alternance la mise en pression des circuits en continue et en circuit fermé, les autres ensembles de drones Ouest-Est et Haut-Bas fonctionneront de la même manière et suivant le même concept pour définir le sens et la direction du déplacement, une caméra et un automate permettront de définir la gestion des mouvements et actions voulues en fonction des obstacles, pour définir la direction et les différentes actions à entreprendre sur ces ensembles de drones pour se déplacer à droite ou à gauche, en avant ou en arrière et du haut ou vers le bas. Cette technologie de fonctionnement d'un ensemble de drones peut conjuguer deux énergies l'une sous l'effet d'un fluide en pression et débit et l'autre sous l'effet des aimants permanents.
